# EUROPEAN PATENT SPECIFICATION

(11) **EP 3 822 835 B1**
(45) Date of publication and mention of the grant of the patent: **03.01.2024**
(21) Application number: 19884133.0
(22) Date of filing: 13.11.2019
(51) Int. Cl.: G06F 21/57, G06F 21/74, G06F 1/24, G06F 1/28, G06F 12/02, G06F 12/0875, G06F 12/14, G06F 11/14

(54) **METHOD FOR DELETING SECURE SERVICE, AND ELECTRONIC APPARATUS**
VERFAHREN ZUM LÖSCHEN EINES SICHEREN DIENSTES UND ELEKTRONISCHE VORRICHTUNG
PROCÉDÉ D'EFFACEMENT DE SERVICE SÉCURISÉ, ET APPAREIL ÉLECTRONIQUE

(30) Priority: 14.11.2018 CN 201811352889; 28.12.2018 CN 201811625740
(43) Date of publication of application: 19.05.2021
(73) Proprietor: HUAWEI TECHNOLOGIES CO., LTD., Shenzhen, Guangdong 518129 (CN)
(72) Inventor: LI, Zhuofei, Shenzhen, Guangdong 518129 (CN); PENG, Min, Shenzhen, Guangdong 518129 (CN); YIN, Gaosheng, Shenzhen, Guangdong 518129 (CN)
(74) Representative: Grünecker Patent- und Rechtsanwälte PartG mbB
(86) International application number: PCT/CN2019/117822
(87) International publication number: WO 2020/098664

(56) References cited:
- EP-B1- 2 590 383
- CN-A- 101 459 902
- CN-A- 103 699 420
- CN-A- 108 780 482
- KR-B1- 101 448 085
- US-A1- 2012 238 206
- US-A1- 2018 054 463

## Description

### TECHNICAL FIELD

This application relates to the field of communication technologies, and in particular, to a method for deleting a security service and an electronic device.

### BACKGROUND

An electronic device has three-tier application environments, namely, a rich execution environment (Rich Execution Environment, REE), a trusted execution environment (Trusted Execution Environment, TEE), and a secure element (Secure Element, SE). Because an SE has a simple software system and relatively fewer hardware components, it is easy to establish physical protection and guarantee security, thereby improving security strength of the SE, so that a security system with a higher security requirement can be served.

Specifically, a security domain (Security Domain, SD) in the SE is mainly used to manage applets (applet) in the SE, and is responsible for providing security control functions such as security communication and identity authentication in processes such as applet downloading and deleting. The SD specifically includes an issuer security domain (Issuer Security domain, ISD) (or referred to as a main security domain) and a supplementary security domain (Supplementary Security Domain, SSD). The ISD is used by an SE issuer to manage all applets on the SE, including creating an SSD for an applet of a service provider. The created SSD is specifically used to manage the applet of the service provider.

For example, a user may install a bank APP on an electronic device by downloading an installation package from an application store. The user may process related bank services by using the bank APP. If the bank APP further has a function of installing a mobile phone key, the user may install the mobile phone key by operating related options. To ensure data security of the mobile phone key, the electronic device installs data having a high security requirement in the mobile phone key in an SE in a form of an applet. During installation, the electronic device first applies to a server of an SE issuer (manufacturer of the electronic device) for an SSD through a server of a service provider (bank), and installs an applet of the mobile phone key in the SSD to manage the data having a high security requirement in the mobile phone key.

When a user does not need to use a security service any more, the user usually directly deletes an APP providing the security service. In this case, the electronic device only deletes the APP of the security service at the application layer without deleting the applet or an SSD in the SE. In this case, for some security services (such as a smart key or an access card), the applet remaining in the SE may still directly interact with an external card reader through near field communication (near field communication, NFC), and can implement corresponding functions without being invoked by the REE or the TEE, resulting in security risks.
US 2012/238206 A1 discloses a communications device including a near field communication (NFC) device, at least one memory configured to store secure application data to be communicated via the NFC device and a secure element (SE) application programming interface (API) associated with the secure application data, and a processor coupled with the NFC device and with the at least one memory wherein the processor is configured to disable the SE API to prevent access to the secure application data based upon a security condition, and enable the SE API to allow access to the secure application data based upon a security restore event. In particular, applications are deleted from an embedded secure element of the communications device by a trusted service manager after a reset operation of the communications device. KR 101 448 085 B1 discloses a method of managing applets issued to a secure element and a mobile device and a service management server using the method. EP 2 590 383 B1 discloses a mobile communications device including a near field communications (NFC) device, an input device configured to generate a memory wipe command, a memory, and a memory controller coupled with the NFC device, the input device, and the memory. The memory controller may be configured to receive secure data from a provisioning server to the memory, receive wiping instruction data from the provisioning server to the memory for wiping the secure data from the memory, and wipe the secure data from the memory based upon the memory wipe command and the received wiping instruction data.

### SUMMARY

This application provides a method for deleting a security service and an electronic device. The electronic device can delete a secure element applet (applet) corresponding to a security service in an SE, thereby preventing the secure element applet remaining in the SE from causing security risks, and improving security of the electronic device.

According to a first aspect, this application provides a method for deleting a security service, applicable to an electronic device, where the electronic device has a secure element SE, and the method includes:
receiving, by the electronic device, an instruction for wiping data or performing a factory reset, and setting a first identifier according to the instruction; shutting down or restarting the electronic device; reading, by the electronic device, the first identifier if it is detected that the electronic device is powered on or is networked; sending, by the electronic device, a first request to a server if the first identifier is set, where the first request is used to request the server to delete a security service from the SE; receiving, by the electronic device, a first command sent by the server, where the first command is a command sent by the server according to the first request to instruct the electronic device to delete a target security service in the SE, and the target security service is determined by the server based on a security service installed in the SE and a list of deletable security services stored in the server; deleting, by the electronic device, a secure element applet corresponding to the target security service from the SE according to the first command; and deleting, by the electronic device, a supplementary security domain SSD corresponding to the target security service from the SE according to the first command.

For example, after receiving an operation (an operation of selecting an option for a factory reset in system settings, or an operation of simultaneously pressing and holding a power button and a volume up button (or a volume down button)) performed by a user to perform a factory reset, the electronic device may write an operation identifier. The operation identifier is used to prompt the electronic device to restart and enter a recovery mode, and indicate the electronic device to perform a factory reset or wipe data.

For example, a list of deletable security services is negotiated in advance by an SE issuer and a security service provider. When the electronic device wipes data or performs a factory reset, a TSM of the SE issuer may delete an applet and an SSD corresponding to a security service in the SE.

It can be learned that when the electronic device wipes data or performs a factory reset, the electronic device may request a server to delete the applet corresponding to the security service from the SE, thereby preventing the applet of the security service (for example, a smart key or an access card) remaining in the SE from causing security risks, and improving security of the electronic device.

Further, when wiping data or performing a factory reset, the electronic device may delete an SSD corresponding to the security service according to a command from the server, helping to recover SE space, and improving space utilization of the SE.

In a possible implementation, the first identifier is stored in a trusted execution environment TEE of the electronic device or is stored in the SE. In this way, when the electronic device wipes data or performs a factory reset, the first identifier is not wiped, so that after the electronic device wipes data or performs a factory reset, the security service can be deleted based on the first identifier.

In a possible implementation, the first identifier is stored in a first area in the TEE of the electronic device, and the first area is an area that is not to be deleted after the electronic device wipes data or performs a factory reset.

In a possible implementation, the method further includes: disabling, by the electronic device, a near field communication NFC function of the secure element applet in the electronic device if the electronic device receives the instruction for wiping data or performing a factory reset.

In the method provided in the embodiments of this application, an SSD and an applet of a security service are deleted based on a to-be-deleted identifier after a mobile phone is restarted or is networked. Therefore, before the electronic device deletes the SSD and the applet of the security service, applets of some security services (for example, a car key, an access card, and a bus card) may still directly interact with an external card reader through NFC to implement corresponding functions, resulting in security risks. Therefore, after the electronic device receives the instruction for wiping data or performing a factory reset, the near field communication NFC function of the secure element applet in the electronic device is disabled, helping to improve security of the electronic device.

In a possible implementation, the method further includes: setting, by the electronic device, a second identifier if the electronic device receives the instruction for wiping data or performing a factory reset, and denying, by a trusted application TA that is in the TEE of the electronic device and that manages the SE, access of a service TA to the SE if the second identifier is set.

Before the electronic device deletes the SSD and the applet of the security service, applets of some security services (for example, an applet of a mobile phone key) may still be invoked by the TEE, resulting in security risks. Therefore, after the electronic device receives the instruction for wiping data or performing a factory reset, the trusted application TA that is in the TEE of the electronic device and that manages the SE denies access of a service TA to the SE, helping to improve security of the electronic device.

In a possible implementation, the second identifier is stored in a second area in the TEE of the electronic device, and the second area is an area that is not to be deleted after the electronic device wipes data or performs a factory reset.

In a possible implementation, after the electronic device deletes the secure element applet and the SSD corresponding to the target security service from the SE according to the first command, the method for deleting a security service further includes: wiping, by the electronic device, the second identifier.

The second identifier is an identifier for prohibiting the TEE from accessing the SE. After the electronic device deletes the security service, a permission of the TEE to access the SE may be recovered, thereby ensuring normal use of the electronic device.

In a possible implementation, the method further includes: reporting, by the electronic device, the SSD corresponding to the security service installed in the SE and the secure element applet installed in the SSD corresponding to the installed security service to the server.

A TSM of the SE is responsible for creating an SSD for a security service in the SE, and a TSM of a service specifically installs an applet of the security service in the SSD. Therefore, the TSM of the SE is not aware of installation of the applet in the SSD. It can be learned from a basic international standard (Global Platform, GP) of the SE that when deleting the SSD of the security service, the TSM of the SE needs to delete the applet from the SSD first. Therefore, the TSM of the SE needs to synchronize data with the SE to obtain information about an applet in each SSD in the SE, to help to delete the applet and the SSD.

In a possible implementation, after the electronic device deletes the secure element applet or the SSD corresponding to the target security service according to the first command, the method for deleting a security service further includes: wiping, by the electronic device, the first identifier.

After the electronic device deletes the security service, the first identifier is wiped, thereby preventing the electronic device from performing a security service deletion process again when the electronic device is powered on or is networked.

According to a second aspect, an electronic device is provided, including: a processor, a memory, and a touchscreen, where the memory and the touchscreen are coupled to the processor, the memory is configured to store computer program code, the computer program code includes computer instructions, and the processor, when reading the computer instructions from the memory, causes the electronic device to perform the following operations:
receiving an instruction for wiping data or performing a factory reset, and setting a first identifier according to the instruction; shutting down or restarting; reading the first identifier if it is detected that the electronic device is powered on or is networked; sending a first request to a server if the first identifier is set, where the first request is used to request the server to delete a security service from an SE; receiving a first command sent by the server, where the first command is a command sent by the server according to the first request to instruct the electronic device to delete a target security service in the SE, and the target security service is determined by the server based on a security service installed in the SE and a list of deletable security services stored in the server; deleting a secure element applet corresponding to the target security service from the SE according to the first command; and deleting a supplementary security domain SSD corresponding to the target security service from the SE according to the first command.

In a possible implementation, the first identifier is stored in a trusted execution environment TEE of the electronic device or is stored in the SE.

In a possible implementation, the first identifier is stored in a first area in the TEE of the electronic device, and the first area is an area that is not to be deleted after the electronic device wipes data or performs a factory reset.

In a possible implementation, the operations further include: disabling a near field communication NFC function of the secure element applet in the electronic device if the electronic device receives the instruction for wiping data or performing a factory reset.

In a possible implementation, the operations further include: setting a second identifier if the electronic device receives the instruction for wiping data or performing a factory reset, and denying, by a trusted application TA that is in the TEE of the electronic device and that manages the SE, access of a service TA to the SE if the second identifier is set.

In a possible implementation, the second identifier is stored in a second area in the TEE of the electronic device, and the second area is an area that is not to be deleted after the electronic device wipes data or performs a factory reset.

In a possible implementation, after deleting the secure element applet or the SSD corresponding to the target security service according to the first command, the electronic device wipes the second identifier.

In a possible implementation, the SSD corresponding to the security service installed in the SE and the secure element applet installed in the SSD corresponding to the installed security service are reported to the server.

In a possible implementation, after deleting the secure element applet or the SSD corresponding to the target security service according to the first command, the electronic device wipes the first identifier.

According to a third aspect, a computer storage medium is provided, including computer instructions, where the computer instructions, when run on a terminal, cause a terminal to perform the method according to the first aspect or any one of the possible implementations thereof.

According to a fourth aspect, a computer program product is provided, where the computer program product, when run on a computer, causes the computer to perform the method according to the first aspect or any one of the possible implementations thereof.

### BRIEF DESCRIPTION OF DRAWINGS

FIG. 1 is a schematic diagram of a method for deleting a security service in an SE according to an embodiment of this application;
FIG. 2A and FIG. 2B are a schematic structural diagram of an electronic device according to an embodiment of this application;
FIG. 3 is a schematic structural diagram of another electronic device according to an embodiment of this application;
FIG. 4 is a schematic diagram of a method for setting a to-be-deleted identifier according to an embodiment of this application;
FIG. 5 is a schematic diagram of another method for setting a to-be-deleted identifier according to an embodiment of this application;
FIG. 6 is a schematic diagram of another method for deleting a security service in an SE according to an embodiment of this application; and
FIG. 7 is a schematic diagram of another method for deleting a security service in an SE according to an embodiment of this application.

### DESCRIPTION OF EMBODIMENTS

Usually, when deploying a security service (for example, a smart key, a mobile phone key, a bank card, a bus card, or an access card) that has high security and that is closely related to personal funds or identities, a service provider needs to deploy corresponding applications in three-tier application environments respectively based on security levels of different data in the security service. An application in an REE is referred to as a client application (client application, CA), and has a relatively low security requirement. An application in a TEE is a trusted application, referred to as a TA (TEE application) and has a relatively high security requirement. An application in an SE is referred to as a secure element applet (applet), and has the highest security requirement among the three types of applications.

In the security services, applets (for example, a mobile phone key) of some security services need to be invoked by the REE and the TEE to implement corresponding functions. Applets of some security services (for example, a smart key and an access card) may directly interact with an external card reader by using, for example, a near field communication (near field communication, NFC) technology directly, and can implement corresponding functions without being invoked by the REE and the TEE.

In the prior art, a user usually deletes the security services by operating an APP on an electronic device. In one case, the electronic device directly deletes an APP of the security service at an application layer without deleting an applet or an SSD in the SE. This is because the applet of the security service is installed and deleted by a TSM of the service provider, and the electronic device cannot delete the applet of the security service by itself. However, after the user deletes the APP of the security service, the TSM of the service provider has no motivation to delete the applet of the security service in the SE, that is, does not actively delete the applet of the security service in the SE. This is because if the applet of the security service in the SE is not deleted, and the SSD in the applet is not deleted either, when the APP of the security service is installed on the electronic device again, the electronic device does not need to apply for the SSD from the TSM of an SE issuer again. In this case, for some security services (for example, a smart key and an access card), the applet in the SE may still directly interact with an external card reader through NFC, and can implement corresponding functions without being invoked by the REE or the TEE, resulting in security risks.

In another case, even if the TSM of the service provider has a motivation or is willing to actively delete the applet of the security service from the SE after the user deletes the APP of the security service, there is a problem that the TSM of the service provider cannot perceive whether the user deletes the APP of the security service, further cannot delete the applet of the security service from the SE, and also cannot delete the SSD.

In another case, the TSM of the service provider may perceive that the user deletes the APP of the security service. For example, after the user operates an APP on an electronic device, the APP on the electronic device may interact with a trusted service management (Trusted Service Management, TSM) of a service provider, and the TSM of the service provider deletes the security service applet from the SE by using the over the air technology (Over the Air Technology, OTA). However, because the SSD corresponding to the security service is created and deleted by an SE issuer (which is usually the TSM of the SE issuer, and is hereinafter referred to as the TSM of the SE), the TSM of the service provider still cannot delete the SSD of the security service by itself.

Based on the above, even after the TSM of the service provider deletes the applet of the security service, the SSD of the security service cannot be deleted. As a result, unused SSDs remain in the SE, and space of the SE is wasted.

Currently, based on the foregoing reasons, when the electronic device performs a factory reset, applications of the electronic device in the REE and the TEE are deleted, but applets and SSDs in the SE are not deleted. Therefore, according to the method provided in this embodiment of this application, when the electronic device performs a factory reset, an applet and an SSD of a wiped security service are deleted, thereby helping recover space in the SE, and improving space utilization of the SE.

In this embodiment of this application, the TSM of the SE and the TSM of the service provider may negotiate in advance whether the TSM of the SE can delete the applet and the SSD from the SE when the electronic device performs a factory reset. For an applet and an SSD that a service provider allows to delete, when the electronic device performs a factory reset, the applet and the SSD in the SE of the electronic device are also deleted.

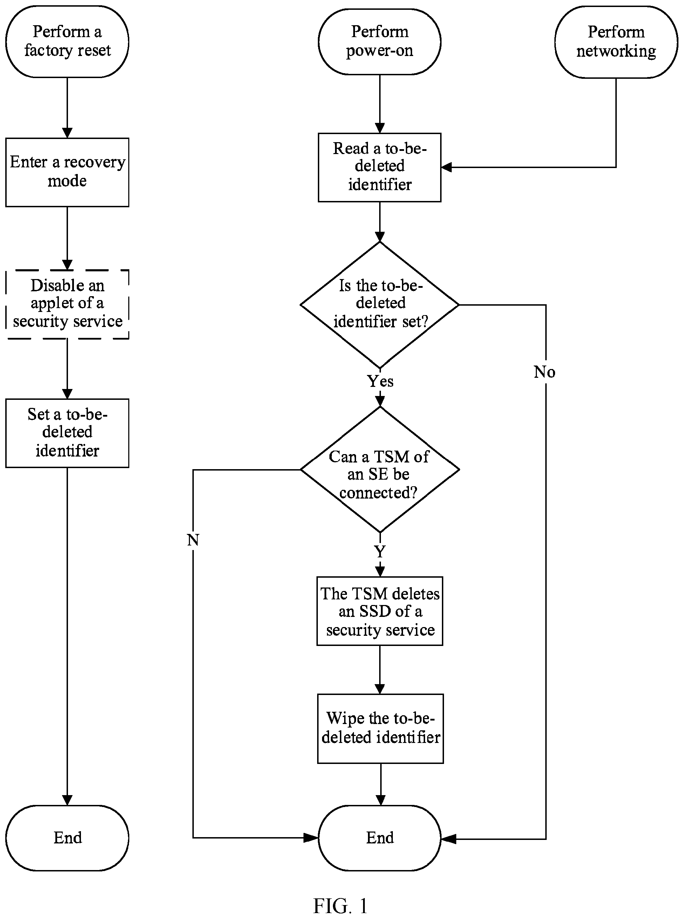

FIG. 1 is a schematic diagram of a method for deleting a security service according to an embodiment of this application. Specifically, when an electronic device enters a recovery mode, and the electronic device indicates to perform a factory reset or wipe data, a to-be-deleted identifier is set. Subsequently, when it is detected that the electronic device is powered on or is networked, the to-be-deleted identifier is read. If the to-be-deleted identifier is set, a TSM of an SE is notified. The TSM of the SE deletes an applet and an SSD of a security service from the SE.

Recovery is a backup function of the electronic device, through which internal data of the electronic device or a system of the electronic device may be modified. In this mode, the electronic device may wipe data or perform a factory reset (wipe data/factory reset). In this mode, the electronic device may further back up or upgrade an existing system and so on, for example, back up and restore a system (backup and restore, install an update.zip upgrade package in a memory card (apply SD card: update.zip), and install a zip upgrade package from an SD card (install zip from SD card). The method for setting a to-be-deleted identifier provided in this embodiment of this application is performed in a process in which the electronic device wipes data or performs a factory reset. Because the process in which the electronic device wipes data or performs a factory reset is performed in a recovery mode, operations that can be performed by the electronic device are limited, thereby helping to ensure security of the electronic device.

In some embodiments of this application, when the electronic device enters the recovery mode, an application of the security service may still be disabled. Then, the electronic device is powered on or is networked. Before the electronic device deletes the applet and the SSD of the security service, it can be ensured that the applet of the security service is not invoked, thereby ensuring security of the electronic device.

After deleting the SSD of the security service from the SE, the electronic device wipes the to-be-deleted identifier. In this way, the electronic device is prevented from performing the deletion process repeatedly when being restarted or networked after the electronic device deletes the SSD of the security service c.

For example, the electronic device in this application may be a mobile phone, a tablet computer, a personal computer (Personal Computer, PC), a personal digital assistant (personal digital assistant, PDA), a smartwatch, a netbook, a wearable electronic device, or an augmented reality (Augmented Reality, AR) device, a virtual reality (Virtual Reality, VR) device, an in-vehicle device, a smart car, a smart speaker, a robot, or the like. A specific form of the electronic device is not specially limited in this application.

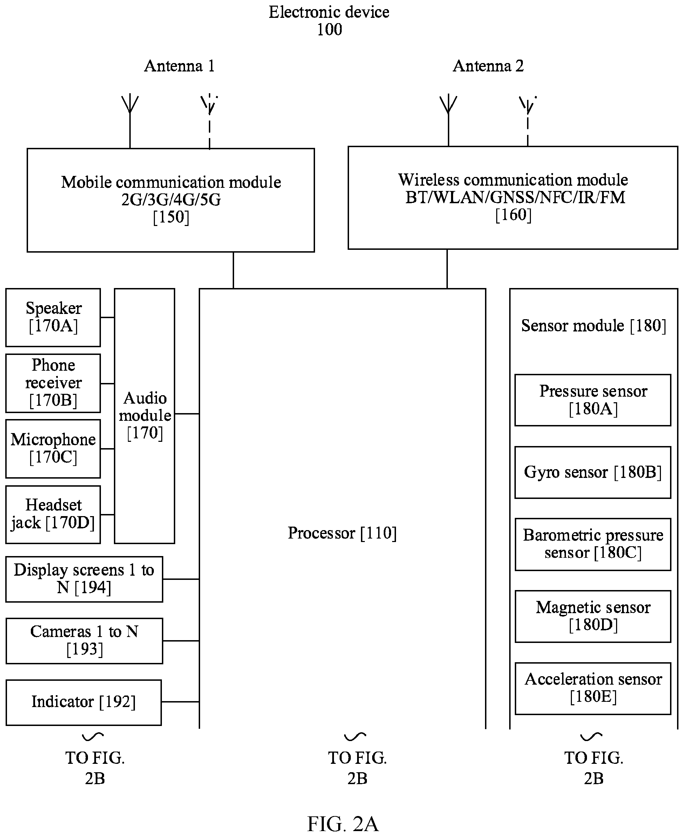

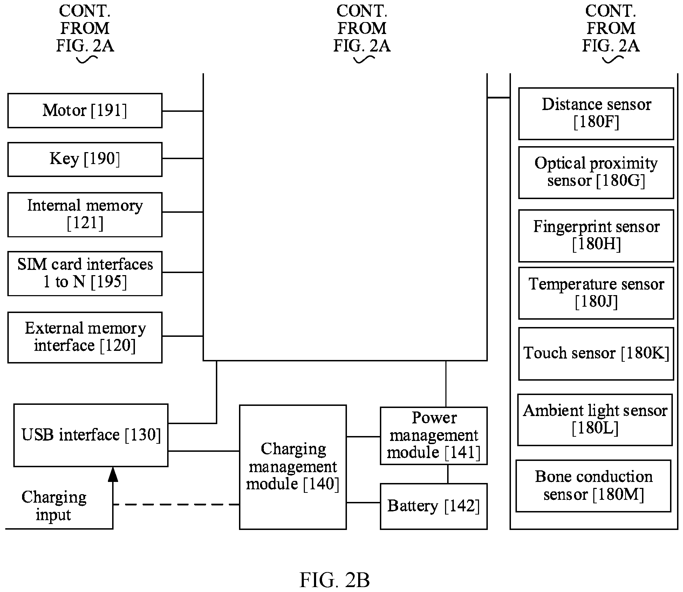

FIG. 2A and FIG. 2B are a schematic structural diagram of an electronic device 100.

The electronic device 100 may include a processor 110, an external memory interface 120, an internal memory 121, a universal serial bus (universal serial bus, USB) interface 130, a charging management module 140, a power management unit 141, a battery 142, an antenna 1, an antenna 2, a mobile communication module 150, a wireless communication module 160, and an audio module 170, a speaker 170A, a phone receiver 170B, a microphone 170C, a headset jack 170D, a sensor module 180, a key 190, a motor 191, an indicator 192, a camera 193, a display screen 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, and a touch sensor 180K, an ambient light sensor 180L, a bone conduction sensor 180M, and the like.

It may be understood that an example structure in this embodiment of the present invention does not constitute a specific limitation on the electronic device 100. In some other embodiments of this application, the electronic device 100 may include more or fewer components than those shown in the figure, or some components may be combined, or some components may be divided, or different component arrangements may be used. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), and the like. Different processing units may be independent devices, or may be integrated into one or more processors.

The controller may be a nerve center and a command center of the electronic device 100. The controller may generate an operation control signal based on an instruction operation code and a timing signal, and read an instruction and control execution of the instruction.

A memory may be further configured in the processor 110, to store an instruction and data. In some embodiments, the memory in the processor 110 is a cache memory. The memory may store an instruction or data that is recently used or cyclically used by the processor 110. If the processor 110 needs to use the instruction or the data again, the processor 110 may directly invoke the instruction or the data from the memory, to avoid repeated access and reduce a waiting time of the processor 110, thereby improving system efficiency.

In some examples of this application, the processor 110 includes three independent units in terms of hardware: specifically, a baseband processing unit, an application processing unit, and a security unit. The baseband processing unit may be, for example, a baseband processor (Baseband Processor, BP), the application processing unit may be, for example, an application processor (Application Processor), and the security unit may be, for example, a secure element (Secure Element, SE). The SE may install an SSD or the like for a security service in the SE according to an instruction of a TSM (a server of an electronic device manufacturer) of an SE issuer. The SE may further install an applet of the security service in the SSD according to an instruction of a TSM (a server of a service provider) of a security service provider.

In some embodiments, the processor 110 may include one or more interfaces. The interface may include an inter-integrated circuit (inter-integrated circuit, 12C) interface, an inter-integrated circuit sound (inter-integrated circuit sound, 12S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface, and the like.

The 12C interface is a two-way synchronization serial bus, and includes a serial data line (serial data line, SDA) and a serial clock line (derail clock line, SCL). In some embodiments, the processor 110 may include a plurality of groups of 12C buses. The processor 110 may be coupled to the touch sensor 180K, a charger, a flash light, the camera 193, and the like by using different 12C bus interfaces. For example, the processor 110 may be coupled to the touch sensor 180K by using the 12C interface, so that the processor 110 communicates with the touch sensor 180K by using the 12C bus interface, to implement a touch function of the electronic device 100.

The I2S interface may be used for audio communication. In some embodiments, the processor 110 may include a plurality of groups of I2S buses. The processor 110 may be coupled to the audio module 170 by using the 12S bus, to implement communication between the processor 110 and the audio module 170. In some embodiments, the audio module 170 may transfer an audio signal to the wireless communication module 160 by using the 12S interface, to implement a function of answering a call by using a Bluetooth headset.

The PCM interface may also be used for audio communication, and sampling, quantization, and encoding of an analog signal. In some embodiments, the audio module 170 may be coupled to the wireless communication module 160 by using the PCM bus interface. In some embodiments, the audio module 170 may alternatively transfer an audio signal to the wireless communication module 160 by using the PCM interface, to implement the function of answering a call by using a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 by using a UART interface, to implement a Bluetooth function. In some embodiments, the audio module 170 may transfer an audio signal to the wireless communication module 160 by using a UART interface, to implement a function of playing music by using a Bluetooth headset.

The MIPI interface may be configured to connect the processor 110 to a peripheral device such as the display screen 194 and the camera 193. The MIPI interface includes a camera serial interface (camera serial interface, CSI), a display serial interface (display serial interface, DSI), and the like. In some embodiments, the processor 110 communicates with the camera 193 by using the CSI interface, to implement a photographing function of the electronic device 100. The processor 110 communicates with the display screen 194 by using a DSI interface, to implement a display function of the electronic device 100.

The GPIO interface may be configured by using software. The GPIO interface may be configured to transmit a control signal, or may be configured to transmit a data signal. In some embodiments, the GPIO interface may be configured to connect the processor 110 to the camera 193, the display screen 194, the wireless communication module 160, the audio module 170, the sensor module 180, and the like. The GPIO interface may alternatively be configured as an 12C interface, an I2S interface, a UART interface, a MIPI interface, or the like.

The USB interface 130 is an interface that conforms to a USB standard specification, and may be specifically a mini USB interface, a micro USB interface, a USB Type C interface, or the like. The USB interface 130 may be configured to connect to the charger to charge the electronic device 100, or may be used for data transmission between the electronic device 100 and a peripheral device, or may be configured to connect to a headset, to play audio by using the headset. The interface may alternatively be configured to connect to another electronic device such as an AR device.

It may be understood that an interface connection relationship between the modules illustrated in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of the interface connection manners.

The charging management module 140 is configured to receive charging input from a charger. The charger may be a wireless charger or a wired charger. In some embodiments of wired charging, the charging management module 140 may receive charging input of a wired charger by using the USB interface 130. In some embodiments of wireless charging, the charging management module 140 may receive wireless charging input by using a wireless charging coil of the electronic device 100. The charging management module 140 may supply power for the electronic device by using the power management unit 141 while charging the battery 142.

The power management unit 141 is configured to connect the battery 142 to the charging management module 140 and the processor 110. The power management unit 141 receives input of the battery 142 and/or the charging management module 140, and supplies power for the processor 110, the internal memory 121, an external memory, the display screen 194, the camera 193, the wireless communication module 160, and the like. The power management unit 141 may be further configured to monitor parameters such as a battery capacity, a battery cycle count, and a state of battery health (an electric leakage or impedance). In some other embodiments, the power management unit 141 may alternatively be configured in the processor 110. In some other embodiments, the power management unit 141 and the charging management module 140 may further be configured in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover a single communication frequency band or a plurality of communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 can provide a solution for wireless communication including 2G/3G/4G/5G and the like to be applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing, such as filtering or amplification, on the received electromagnetic wave, and transfer the electromagnetic wave to the modem processor for demodulation. The mobile communication module 150 may further amplify a signal modulated by the modem processor, and convert the signal into an electromagnetic wave for radiation by using the antenna 1. In some embodiments, at least some functional modules of the mobile communication module 150 may be configured in the processor 110. In some embodiments, at least some functional modules of the mobile communication module 150 maybe configured in a same device as at least some modules of the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transfers the low-frequency baseband signal obtained through demodulation to the baseband processor for processing. The low-frequency baseband signal is processed by the baseband processor and is then transferred to the application processor. The application processor outputs a sound signal by using an audio device (not limited to the speaker 170A, the phone receiver 170B, or the like), or displays an image or a video by using the display screen 194. In some embodiments, the modem processor may be an independent device. In some other embodiments, the modem processor may be independent of the processor 110, and may be configured in a same device as the mobile communication module 150 or another functional module.

The wireless communication module 160 may provide a solution for wireless communication solution including a wireless local area network (wireless local area network, WLAN) (such as a wireless fidelity (wireless fidelity, Wi-Fi) network), Bluetooth (Bluetooth, BT), and a global navigation satellite system (global navigation satellite system, GNSS), frequency modulation (frequency modulation, FM), a near field communication (near field communication, NFC) technology, an infrared (infrared, IR) technology, and the like to be applied to the electronic device 100. The wireless communication module 160 may be one or more devices integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may alternatively receive a to-be-sent signal from the processor 110, perform frequency modulation and amplification on the to-be-sent signal, and convert the signal into an electromagnetic wave for radiation by using the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, a WLAN, NFC, FM, an IR technology, and/or the like. The GNSS may include a global positioning system (global positioning system, GPS), a global navigation satellite system (global navigation satellite system, GLONASS), and a Beidou navigation satellite system (Beidou navigation satellite system, BDS), a quasi-zenith satellite system (quasi-zenith satellite system, QZSS) and/or a satellite based augmentation system (satellite based augmentation system, SBAS).

The electronic device 100 implements a display function by using the GPU, the display screen 194, the application processor, and the like. The GPU is a microprocessor for image processing, and is connected to the display screen 194 and the application processor. The GPU is configured to perform mathematical and geometric calculation, and is configured to render graphics. The processor 110 may include one or more GPUs that execute a program instruction to generate or change display information.

The display screen 194 is configured to display an image, a video, and the like. The display screen 194 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini LED, a micro LED, a micro-OLED, a quantum dot light emitting diode (quantum dot light emitting diode, QLED), or the like. In some embodiments, the electronic device 100 may include one or N display screens 194. N is a positive integer greater than 1.

The electronic device 100 can implement a photographing function by using the ISP, the camera 193, the video codec, the GPU, the display screen 194, the application processor, and the like.

The ISP is configured to process data fed back by the camera 193. For example, during photographing a shutter is enabled, light is transferred to a camera light sensitive element by using a lens, an optical signal is converted into an electrical signal, and the camera light sensitive element transfers the electrical signal to the ISP for processing, and converts the electrical signal into an image that is visible to a naked eye. The ISP may further optimize an algorithm for noise, brightness, and complexion of the image, and optimize parameters, such as exposure and color temperature, of a photographing scene. In some embodiments, the ISP may be configured in the camera 193.

The camera 193 is configured to capture a static image or a video. An optical image is generated for an object by using the lens and is projected onto the light sensitive element. The light sensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP, to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193. N is a positive integer greater than 1.

The digital signal processor is configured to process a digital signal, and can process another digital signal in addition to a digital image signal. For example, when the electronic device 100 performs frequency selection, the digital signal processor is configured to perform Fourier transform and the like on frequency energy.

The video codec is configured to compress or decompress a digital video. The electronic device 100 can support one or more video codecs. In this way, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor that processes input information rapidly by referring to a structure of a biological neural network, for example, by referring to a transmission mode between human brain neurons, and can further perform self-learning continuously. Applications such as intelligent cognition of the electronic device 100, for example, image recognition, face recognition, speech recognition, and text understanding, may be implemented by using the NPU.

The external memory interface 120 may be configured to connect to an external storage card, for example, a micro SD card, to extend a storage capability of the electronic device 100. The external storage card communicates with the processor 110 by using the external memory interface 120, to implement a data storage function. For example, store files, such as music and a video, into the external storage card.

The internal memory 121 may be configured to store computer executable program code, where the executable program code includes an instruction. The processor 110 runs the instruction stored in the internal memory 121, to implement various function applications of the electronic device 100 and data processing. The internal memory 121 may include a program storage area and a data storage area. The program storage area may store an operating system, an application program required by at least one function (for example, a sound playback function and an image display function), and the like. The data storage area may store data (for example, audio data and an address book) created during use of the electronic device 100, and the like. In addition, the internal memory 121 may include a high-speed random access memory, and may further include a non-volatile memory, for example, at least one magnetic disk storage device, a flash memory device, or a universal flash storage (universal flash storage, UFS).

The electronic device 100 may implement an audio function, for example, music playback or recording, by using the audio module 170, the speaker 170A, the phone receiver 170B, the microphone 170C, the headset jack 170D, the application processor, and the like.

The audio module 170 is configured to convert digital audio information into analog audio signal output, and is also configured to convert analog audio input into a digital audio signal. The audio module 170 may be further configured to encode and decode an audio signal. In some embodiments, the audio module 170 may be configured in the processor 110, or some functional modules of the audio module 170 may be configured in the processor 110.

The speaker 170A, also referred to as a "horn", is configured to convert an audio electrical signal into a sound signal. Music can be listened to or a hands-free call can be answered by using the speaker 170A in the electronic device 100.

The phone receiver 170B, also referred to as an "earpiece", is configured to convert an audio electrical signal into a sound signal. When a call is answered or voice information is listened to by using the electronic device 100, the phone receiver 170B may be put close to a human ear for listening to a voice.

The microphone 170C, also referred to as a "mouthpiece", is configured to convert a sound signal into an electrical signal. When making a call or sending voice information, a user can make a sound near the microphone 170C through the mouth of the user to input a sound signal to the microphone 170C. At least one microphone 170C may be configured in the electronic device 100. In some other embodiments, two microphones 170C may be configured in the electronic device 100, to collect a sound signal and further implement a noise reduction function. In some other embodiments, alternatively, three, four, or more microphones 170C may be configured in the electronic device 100, to collect a sound signal, reduce noise, and further identify a sound source, implement a directional recording function, and so on.

The headset jack 170D is configured to connect to a wired headset. The headset jack 170D may be a USB interface 130, or may be a 3.5-mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal and may convert the pressure signal into an electrical signal. In some embodiments, the pressure sensor 180A may be configured on the display screen 194. There are many types of pressure sensors 180A, such as a resistive pressure sensor, an inductive pressure sensor, and a capacitive pressure sensor. The capacitive pressure sensor may be a parallel plate including at least two conductive materials. When a force is applied to the pressure sensor 180A, the capacitance between electrodes changes. The electronic device 100 determines intensity of the pressure based on the change of the capacitance. When a touch operation is applied to the display screen 194, the electronic device 100 detects intensity of the touch operation by using the pressure sensor 180A. The electronic device 100 may also calculate a touch position based on a detection signal of the pressure sensor 180A. In some embodiments, touch operations that are applied to a same touch position but have different touch operation intensity may correspond to different operation instructions. For example, when a touch operation with touch operation intensity less than a first pressure threshold is applied to a short message application icon, an instruction for viewing a short message is executed. When a touch operation with touch operation intensity greater than or equal to the first pressure threshold is applied to the short message application icon, an instruction for creating a new short message is executed.

The gyro sensor 180B may be configured to determine a moving posture of the electronic device 100. In some embodiments, an angular velocity of the electronic device 100 around three axes (namely, x, y, and z axes) may be determined by using the gyro sensor 180B. The gyro sensor 180B may be used for image stabilization during photographing. For example, when the shutter is pressed, the gyro sensor 180B detects an angle at which the electronic device 100 jitters, and calculates, based on the angle, a distance for which a lens module needs to compensate, and allows the lens to cancel the jitter of the electronic device 100 through reverse motion, thereby implementing image stabilization. The gyro sensor 180B may also be used in navigation and a motion sensing game scenario.

The barometric pressure sensor 180C is configured to measure barometric pressure. In some embodiments, the electronic device 100 calculates an altitude by using a barometric pressure value measured by the barometric pressure sensor 180C, to assist in positioning and navigation.

The magnetic sensor 180D includes a Hall sensor. The electronic device 100 may detect opening and closing of a flip leather case by using the magnetic sensor 180D. In some embodiments, when the electronic device 100 is a clamshell phone, the electronic device 100 may detect opening and closing of a flip cover based on the magnetic sensor 180D. Further, based on a detected opening or closing state of the leather case or a detected opening or closing state of the flip cover, a feature such as automatic unlocking of the flip cover is set.

The acceleration sensor 180E can detect a magnitude of accelerations of the electronic device 100 in various directions (generally three axes), can detect a magnitude and a direction of gravity when the electronic device 100 is static, and may be further configured to recognize an attitude of the electronic device, and be applied to switching between landscape orientation and portrait orientation, a pedometer, or another application.

The distance sensor 180F is configured to measure a distance. The electronic device 100 may measure a distance by using an infrared or a laser. In some embodiments, in a photographing scenario, the electronic device 100 may use the distance sensor 180F to measure a distance to implement fast focusing.

The optical proximity sensor 180G may include, for example, a light emitting diode (LED) and an optical detector such as a photodiode. The light emitting diode may be an infrared light emitting diode. The electronic device 100 emits infrared light by using the light emitting diode. The electronic device 100 detects infrared reflected light from an object nearby by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that a user holds the electronic device 100 close to an ear to make a call, to automatically turn off the screen for power saving. The optical proximity sensor 180G may alternatively be used in a leather case mode or a pocket mode to automatically unlock or lock the screen.

The ambient optical sensor 180L is configured to sense ambient light brightness. The electronic device 100 may adaptively adjust brightness of the display screen 194 based on the sensed ambient light brightness. The ambient optical sensor 180L may be further configured to automatically adjust white balance during photographing. The ambient optical sensor 180L may also cooperate with the optical proximity sensor 180G to detect whether the electronic device 100 is in a pocket, to prevent a false touch.

The fingerprint sensor 180H is configured to collect a fingerprint. The electronic device 100 may use a feature of the collected fingerprint to implement fingerprint-based unlocking, accessing an application lock, fingerprint-based photographing, fingerprint-based call answering, and the like.

The temperature sensor 180J is configured to detect temperature. In some embodiments, the electronic device 100 executes a temperature processing policy by using temperature detected by the temperature sensor 180J. For example, when the temperature reported by the temperature sensor 180J exceeds a threshold, the electronic device 100 lowers performance of a processor located near the temperature sensor 180J, to reduce power consumption and implement thermal protection. In some other embodiments, when the temperature is below another threshold, the electronic device 100 heats the battery 142, to prevent the low temperature from causing the electronic device 100 to shut down abnormally. In some other embodiments, when the temperature is below still another threshold, the electronic device 100 boosts an output voltage of the battery 142 to prevent abnormal shutdown caused by the low temperature.

The touch sensor 180K is also referred to as a "touch panel". The touch sensor 180K may be disposed on the display screen 194, and the touch sensor 180K and the display screen 194 form a touchscreen. The touch sensor 180K is configured to detect a touch operation on or near the touch sensor 180K. The touch sensor may transfer a detected touch operation to the application processor, to determine a type of a touch event, and provide visual output related to the touch operation by using the display screen 194. In some other embodiments, the touch sensor 180K may alternatively be disposed on a surface of the electronic device 100 at a position different from that of the display screen 194.

The bone conduction sensor 180M may obtain a vibration signal. In some embodiments, the bone conduction sensor 180M may obtain a vibration signal of a vibration bone of a human vocal-cord part. The bone conduction sensor 180M may also come into contact with a human pulse to receive a blood pressure pulse signal. In some embodiments, the bone conduction sensor 180M may further be disposed in a headset, and is combined with the headset into a bone conduction headset. The audio module 170 may parse out a voice signal based on the vibration signal of a vibration bone block of the vocal-cord part that is obtained by the bone conduction sensor 180M, to implement a voice function. The application processor may parse heart rate information based on the blood pressure pulse signal obtained by the bone conduction sensor 180M, to implement a heart rate detection function.

The key 190 includes a power key, a volume key, and the like. The key 190 may be a mechanical key or a touch-based key. The electronic device 100 may receive key input, and generate key signal input related to a user setting and function control of the electronic device 100.

The motor 191 may generate a vibration prompt. The motor 191 may be used for an incoming call vibration prompt or a touch vibration feedback. For example, touch operations applied to different applications (for example, photographing and audio playback) may correspond to different vibration feedback effects. The motor 191 may also correspond to different vibration feedback effects for touch operations applied to different areas of the display screen 194. Different application scenarios (for example, a time reminder, information receiving, an alarm clock, and a game) may also correspond to different vibration feedback effects. Customization of a touch vibration feedback effect may also be supported.

The indicator 192 may be an indicator light, and may be used to indicate a charging state and a power change, and may also be configured to indicate a message, a missed call, a notification, and the like.

The SIM card interface 195 is configured to connect to a SIM card. The SIM card may be inserted into the SIM card interface 195 or plugged from the SIM card interface 195, to come into contact with or be separated from the electronic device 100. The electronic device 100 may support one or N SIM card interfaces. N is a positive integer greater than 1. The SIM card interface 195 can support a nano SIM card, a micro SIM card, a SIM card, and the like. A plurality of cards may all be inserted into the same SIM card interface 195. The plurality of cards may be of a same type or different types. The SIM card interface 195 may further be compatible with different types of SIM cards. The SIM card interface 195 may also be compatible with an external memory card. The electronic device 100 interacts with a network by using a SIM card, to implement functions such as a call and data communication. In some embodiments, the electronic device 100 uses an eSIM, that is, an embedded SIM card. The eSIM card may be embedded in the electronic device 100 and cannot be separated from the electronic device 100.

A software system of the electronic device 100 may use a layered architecture, an event-driven architecture, a micro core architecture, a micro service architecture, or a cloud architecture. In this embodiment of the present invention, an Android system with a layered architecture is used as an example to illustrate a software structure of the electronic device 100.

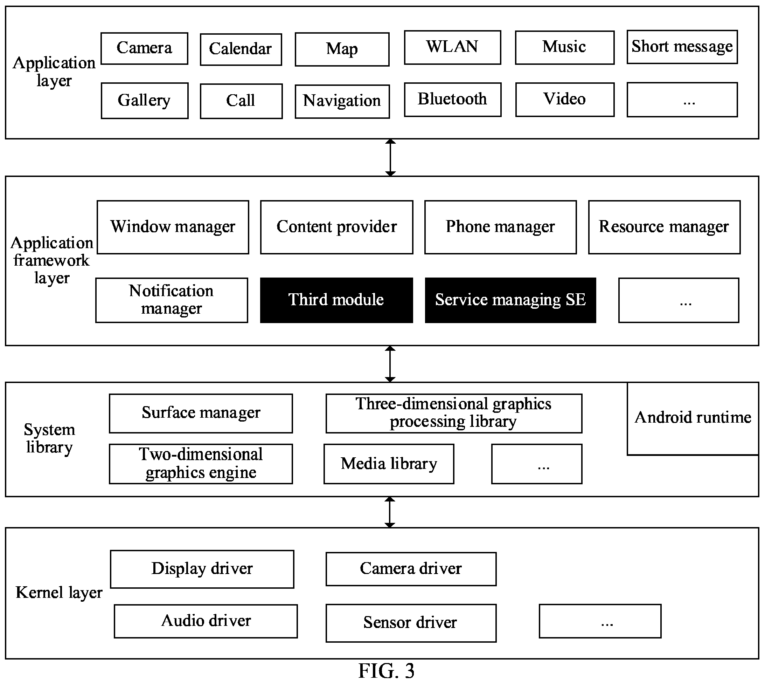

FIG. 3 is a block diagram of a software structure of an electronic device 100 according to an embodiment of the present invention.

In the layered architecture, software is divided into a plurality of layers, and each layer has a clear role and task. The layers communicate with each other by using a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 3, the application layer may include application packages such as camera, gallery, calendar, call, map, navigation, WLAN, Bluetooth, music, video, and short message.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, and the like.

In some embodiments of this application, the application framework may include a service of managing an SE. The service of managing an SE may communicate with a cloud server, for example, a TSM of an SE issuer (hereinafter referred to as the TSM of the SE for short). For example, a command for sending an application protocol data unit (application protocol data unit, APDU) and the like to the SE sent by the TSM of the SE is received, so that the SE executes a corresponding command. The service managing the SE may also request, by using a CA managing the SE, a TA managing the SE to sign. For specific functions of the service managing the SE, refer to the following description.

In some other embodiments of this application, the application framework layer may further include a third module. The third module may be configured to detect that the electronic device 100 is powered on or is networked, and so on. In some examples, the third module may further communicate with the TSM of the SE, to read a to-be-deleted identifier, request the TSM of the SE to synchronize data with the SE, send a command for performing a factory reset of the SE, and so on. In some other examples, the third module may alternatively communicate with the service managing the SE, to notify the service managing the SE of that the to-be-deleted identifier is set.

The window manager is used to manage a window program. The window manager may obtain a size of a display screen, determine whether there is a status bar, lock the screen, take a screenshot, and the like.

The content provider is configured to store and obtain data and make the data accessible to an application program. The data may include a video, an image, audio, calls made and answered, browsing history, a bookmark, an address book, and the like.

The view system includes visual controls such as a control for displaying a text and a control for display an image. The view system may be configured to construct an application program. The display interface may include one or more views. For example, a display interface including a short message notification icon may include a text displaying view and an image displaying view.

The phone manager is configured to provide a communication function of the electronic device 100, for example, management of a call status (including answering or declining).

The resource manager provides various resources, such as a localized character string, an icon, an image, a layout file, and a video file, for an application program.

The notification manager enables an application program to display a notification message in a status bar that may be used to convey a message of a notification type, where the message may disappear automatically after a short stay without user interaction. For example, the notification manager is configured to notify a user of download completion or remind a user of a message. The notification manager may alternatively be a notification in a form of a chart or a scroll bar text in a status bar at the top of the system, for example, a notification of an application program run on the background, or may display a notification in a form of a dialog window on the screen. For example, text information is alerted for in the status bar, an announcement is produced, the electronic device vibrates, or the indicator light blinks.

The Android runtime includes a core library and a virtual machine. The Android runtime is responsible for scheduling and management of the Android system.

The core library includes two parts: one is a function that needs to be called by a java language, and the other is a core library of Android.

The application program layer and the application program framework layer are run on the virtual machine. The virtual machine executes java files of the application program layer and the application program framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of application programs.

The media library supports playback and recording in a plurality of commonly used audio and video formats, and static image files. The media library can support a plurality of audio and video encoding formats such as MPEG-4, H.264, MP3, AAC, AMR, JPG, and PNG.

The three-dimensional graphics processing library is configured to implement drawing of three-dimensional graphics, image rendering, synthesis, layer processing, and the like.

The 2D graphics engine is a drawing engine for 2D drawings.

The kernel layer is a layer between hardware and software. The kernel layer includes at least a display driver, a camera driver, an audio driver, and a sensor driver.

The following illustrates working processes of software and hardware of the electronic device 100 with reference to an image capturing or photographing scenario.

When the touch sensor 180K receives a touch operation, a corresponding hardware interrupt is sent to the kernel layer. The kernel layer processes the touch operation into an original input event (including information such as coordinates of a touch and a time stamp of the touch operation). The original input event is stored at the kernel layer. The application framework layer obtains the original input event from the kernel layer, and recognizes a control corresponding to the input event. Using an example in which the touch operation is a touch/click operation, and a control corresponding to the click operation is a control of a camera application icon. The camera application invokes an interface of the application framework layer to start a camera application, then starts a camera driver by invoking the kernel layer, and captures a static image or a video by using the camera 193.

All technical solutions included in the following embodiments can be implemented in the electronic device 100 having the foregoing hardware architecture and software architecture.

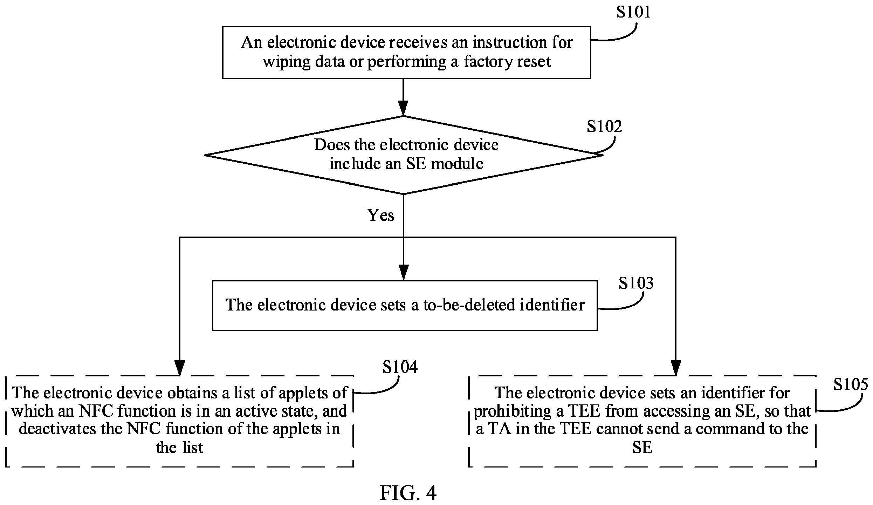

FIG. 4 is a schematic flowchart of a method for setting a to-be-deleted identifier for a security service according to an embodiment of this application. The method specifically includes the following steps.

S101. An electronic device receives an instruction for wiping data or performing a factory reset.

Usually, when receiving the instruction for wiping data or performing a factory reset, the electronic device enters a recovery mode. For example, when the electronic device is in a powered-on state, a user may operate an option for a factory reset in system settings of the electronic device, to make the electronic device perform a factory reset, and the electronic device enters the recovery mode after being restarted. In another example, when the electronic device is in a powered-off state, the user may simultaneously press and hold a power button and a volume up button (or a volume down button), to make the electronic device enter the recovery mode. Specifically, after receiving an operation (an operation of selecting an option for a factory reset in system settings, or an operation of simultaneously pressing and holding a power button and a volume up button (or a volume down button)) performed by a user to perform a factory reset, the electronic device may write an operation identifier. The operation identifier is used to prompt the electronic device to restart and enter the recovery mode, and indicate the electronic device to perform a factory reset or wipe data.

It should be noted that the electronic device may alternatively enter the recovery mode in some other cases, for example, when a failure occurs in a mobile phone, and the system automatically starts to perform a factory reset. Alternatively, in a scenario in which some applications in the mobile phone wipe data in the electronic device, the electronic device is also indicated to enter the recovery mode. A process of witting the operation identifier by an electronic device is similar to the foregoing process, and details are not described again. A specific manner and a specific scenario in which the electronic device enters the recovery mode are not limited in this embodiment of this application.

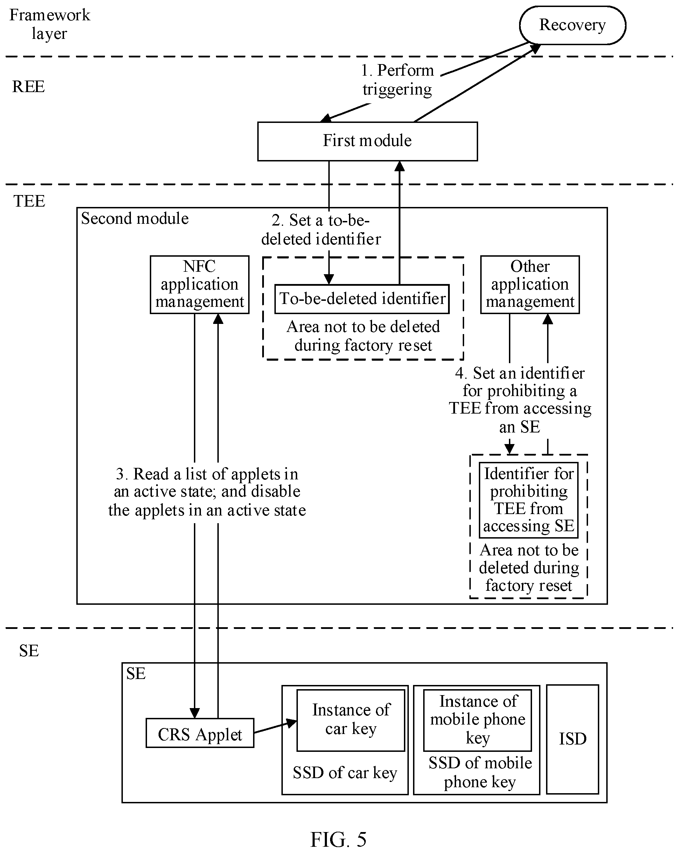

For example, as shown in FIG. 5, a first module may be configured in an REE of the electronic device, and configured to detect whether the electronic device enters the recovery mode and whether the electronic device is indicated to perform a factory reset or wipe data. A second module may further be configured in the TEE and configured to set a to-be-deleted identifier and the like. The first module and the second module may be modules added in the electronic device to implement a function of deleting a security service provided in this application, or may be corresponding functions added by using an existing module. For example, the first module may be a CA managing an SE, and the second module may be a TA managing the SE. This is not limited in this application.

For example, after the electronic device enters the recovery mode, the first module is notified. After learning that the electronic device enters the recovery mode, the first module notifies the second module to start to set a to-be-deleted identifier. Alternatively, after detecting that the electronic device enters the recovery mode, the first module notifies the second module to start to set a to-be-deleted identifier. That is, step S102 is performed.

It should be noted that when performing a factory reset, after entering the recovery mode, the electronic device deletes user data on the electronic device based on a specific process, including an account, system settings, application settings, installed applications, and the like. The deleted applications include a CA in the REE of the electronic device and a TA in the TEE thereof. In some examples, the first module and the second module in this application are also removed. Therefore, the method for setting a to-be-deleted identifier provided in this application needs to be performed after the electronic device enters the recovery mode and before the first module and the second module are removed.

S102. If the electronic device includes a secure element SE, perform step S103. Otherwise, the process ends.

In some examples of this application, the electronic device (for example, the second module) may first obtain an SE list (for example, cplcData data, the data is a chip identifier of the SE) of the electronic device from an operating system (Operating System, OS) of the TEE by using, for example, a TEE SE API (a standard interface of Android). It is determined whether the electronic device includes an SE and a quantity of SEs based on the obtained SE list. If it is determined that the electronic device includes an SE, it is determined that a to-be-deleted identifier needs to be set; otherwise, no to-be-deleted identifier needs to be set.

In some other examples of this application, for an electronic device, alternatively a first module and a second module may be configured in an electronic device including an SE, and a first module and a second module may not be configured in an electronic device not including an SE. In this case, after the first module detects that the electronic device enters the recovery mode, step S103 may directly be performed without determining whether the electronic device includes an SE.

S103. The electronic device sets a to-be-deleted identifier.

In some examples, as shown in FIG. 5, the electronic device (for example, the second module) may set a to-be-deleted identifier in an undeletable area in a TEE of the electronic device. The undeletable area in the TEE of the electronic device means that data in the area is not wiped when the electronic device performs a factory reset, for example, a replay protected memory block (Replay Protected Memory Block, RPMB). In this way, after the electronic device is restarted or is networked, the to-be-deleted identifier may still be accessed for a subsequent operation. In some other examples, the to-be-deleted identifier may alternatively be set in the SE in the electronic device. When the electronic device performs a factory reset, data in the SE is not wiped. In this way, after the electronic device is restarted or is networked, the to-be-deleted identifier may still be accessed for a subsequent operation.

For example, the to-be-deleted identifier may be 0 by default, or when the to-be-deleted identifier is defaulted, it indicates that the SE in the electronic device does not perform a factory reset, or the SE does not need to perform a factory reset. When the to-be-deleted identifier is set, for example, the to-be-deleted identifier may be set to 1, it identifies that the SE in the electronic device needs to perform a factory reset, or there is a deletable SSD in the electronic device.

In some examples, a to-be-deleted identifier may be configured for the electronic device. That is, when the to-be-deleted identifier of the electronic device is configured, it indicates that a subsequent operation may be performed on applets and SSDs in all SEs in the electronic device. In some other examples, the to-be-deleted identifier may alternatively be set by using an SE as a unit. That is, one to-be-deleted identifier is set for each SE that needs to perform a factory reset. When a to-be-deleted identifier of an SE is set, it indicates that the electronic device can perform a subsequent operation on all applets and SSDs in the SE. In still some other examples, the to-be-deleted identifier may alternatively be set by using an applet (or an SSD) as a unit. That is, the second module sets a to-be-deleted identifier for each applet (or SSD) that needs to be deleted. When a to-be-deleted identifier of each applet (or SSD) is set, it indicates that the electronic device may perform a subsequent operation on the applets and the SSD. This is not limited in this embodiment of this application.

In the method provided in the embodiments of this application, an SSD and an applet of a security service are deleted based on a to-be-deleted identifier after a mobile phone is restarted or is networked. Therefore, before the electronic device deletes the SSD and the applet of the security service, applets of some security services (for example, a car key, an access card, and a bus card) may still directly interact with an external card reader through NFC to implement corresponding functions, resulting in security risks. Therefore, to further ensure security of the electronic device, after step S102, an NFC function of the security service may be further disabled, that is, step S104 is performed as follows:

S104. The electronic device obtains a list of applets of which an NFC function is in an active state, and deactivates (deactivate) the NFC function of the applets in the list.

For example, as shown in FIG. 5, the second module may send a GET STATUS command to a CRS applet in the SE, to obtain a list of applets of which an NFC function is in an active state in the SE. The CRS applet is an application that manages the NFC function of each applet in the SE, and is responsible for activating (activate) and deactivating (deactivate) the NFC function of each applet. Then, the second module sends a SET STATUS command to the CRS applet, and the CRS applet disables the NFC function of the applets in the list, that is, makes the NFC function of the applets in an inactive state. In this way, the applets cannot respond to an NFC command sent by an external card reader, and therefore, cannot implement corresponding functions, thereby ensuring data security of the applet.

It should be noted that step S104 may be performed before, after, or simultaneously with step S103. This is not limited in this embodiment of this application.

In addition, before the electronic device deletes the SSD and the applet of the security service, applets of some security services (for example, an applet of a mobile phone key) may still be invoked by the TEE, resulting in security risks. Therefore, to further ensure security of the electronic device, after step S102, the TEE may further be prohibited from accessing the SE. That is, step S105 is performed as follows:

S105. The electronic device sets an identifier for prohibiting a TEE from accessing the SE, so that a TA in the TEE cannot send a command to the SE.

The identifier for prohibiting the TEE from accessing the SE may be stored in an undeletable area in the TEE of the electronic device, for example, an RPMB.

In some examples, before accessing the SE, all TAs in the TEE of the electronic device first access a TA managing the SE, and access the SE by using the TA managing the SE. In this way, the second module may notify the TA managing the SE, and the TA managing the SE sets the identifier for prohibiting the TEE from accessing the SE. In some other examples, the second module may alternatively be a TA managing the SE. In this case, the second module may set the identifier for prohibiting the TEE from accessing the SE. In this way, before accessing the SE, the TA in the TEE first queries for the identifier for prohibiting the TEE from accessing the SE. If the identifier for prohibiting access to the SE is set, access to the SE is not allowed; or if the identifier for prohibiting access to the SE is not set, access to the SE is allowed.

It should be noted that step S105 may be performed before, after, or simultaneously with step S103. This is not limited in this embodiment of this application.

Subsequently, after detecting that the electronic device is powered on or is networked, the electronic device reads a to-be-deleted identifier. If the to-be-deleted identifier is set, the electronic device triggers a factory reset of the SE, that is, wipes the applet and the SSD in the SE. A specific implementation process is described below in detail.

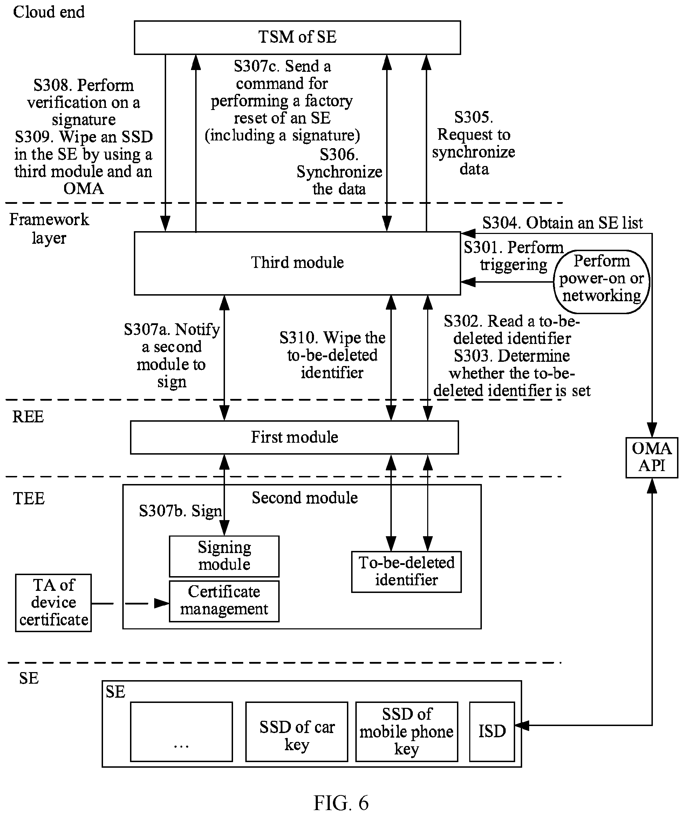

FIG. 6 is a schematic flowchart of deleting a security service according to an embodiment of this application. The method specifically includes the following steps.

S301. Detect that an electronic device is powered on or is networked.

In some examples, a third module may be configured at a framework layer of the electronic device to detect that the electronic device is powered on or detect a broadcast message sent when the electronic device is networked. The third module may be a newly added module, or may be a corresponding function added to an existing module. For example, the third module may alternatively be a corresponding function added to an existing module (which may also be referred to as a service managing the SE) in the framework layer of the electronic device. This is not specifically limited in this embodiment of this application. This is not limited in this embodiment of this application.

In some other examples, before step S301, the electronic device wipes a CA in an REE and a CA in a TEE in the recovery mode, including a first module and a second module. The electronic device is shut down or restarted after all processes of recovery are executed. When the electronic device is restarted, the electronic device reads corresponding data and programs from a read only memory (read only memory, ROM) image (a copy recording data of a ROM chip), to complete services and programs that need to be installed when the electronic device is powered on. The third module at the framework layer, the first module in the REE, and the second module in the TEE are included. In other words, step S301 and the subsequent steps are performed after the electronic device performs the recovery and restarts, and the third module, the first module, and the second module are installed.

In still some other examples, in the method provided in this application, an applet and an SSD can be deleted from the SE only after the electronic device is connected to a cloud server, that is, a TSM of an SE issuer (hereinafter referred to as the TSM of the SE for short). Therefore, the third module may first determine whether the electronic device can be connected to the TSM of the SE. Step S302 is performed only after it is determined that the electronic device can be connected to the TSM of the SE. This is not limited in this embodiment of this application.

S302. The electronic device reads a to-be-deleted identifier.

In some examples, the to-be-deleted identifier is stored in the second module, and the third module may read the to-be-deleted identifier from the second module through the first module.

In some other examples, the to-be-deleted identifier is stored in the SE in the electronic device, and the third module may read the to-be-deleted identifier from the SE through the first module and the second module.

S303. Determine whether the to-be-deleted identifier is set. If the to-be-deleted identifier is set, step S304 is performed; otherwise, the process ends.

S304. The electronic device obtains an SE list.

In some examples, the third module may obtain the SE list from an SE by using a related technology specified in an open mobile alliance (open mobile alliance, OMA) protocol, and determine, according to the obtained SE list, whether the electronic device includes an SE and a quantity of SEs. In this application, if there are a plurality of SEs in the electronic device, an SSD on each SE needs to be wiped for each SE, that is, a factory reset of each SE is completed.

S305. If the electronic device can be connected to a TSM of an SE issuer, the electronic device sends a request to the TSM of the SE based on the SE list, to request the TSM of the SE to synchronize data with each SE. If the electronic device cannot be connected to the TSM of the SE, this process ends.

In some examples, when the electronic device can be connected to the TSM of the SE, the electronic device may further request the TSM of the SE to generate an operand (operand) (or a random number), so that during subsequent data communication between the electronic device and the TSM of the SE, the operand may be used to prevent a playback attack, thereby ensuring data security.

S306. The TSM of the SE synchronizes data with each SE, to obtain an SSD installed in the SE and applet information of each SSD.

A TSM of the SE is responsible for creating an SSD for a security service in the SE, and a TSM of a service specifically installs an applet of the security service in the SSD. Therefore, the TSM of the SE is not aware of installation of the applet in the S SD. It can be learned from a basic international standard (Global Platform, GP) of the SE that when deleting the SSD of the security service, the TSM of the SE needs to delete the applet from the SSD first. Therefore, the TSM of the SE needs to synchronize data with the SE to obtain information about an applet in each SSD in the SE, to help to delete the applet and the SSD.

S307. The electronic device sends a command for performing a factory reset of the SE to the TSM of the SE, where the command for performing a factory reset of the SE includes a signature.

For example, the third module may notify, by using the first module, the second module to sign. The third module sends the command for performing a factory reset of the SE to the TSM of the SE. The command carries signed data. The foregoing is shown by S307a, S307b, and S307c in FIG. 6 separately.

In some examples of this application, when signing, the second module may use a private key to sign to-be-signed data. In some examples, the second module may sign an operand, to prevent a playback attack and ensure data security. Further, cplcData may be signed. When the electronic device includes two or more SEs, the second module may separately sign each SE. That is, a chip identifier of each SE corresponds to a signature. This application may further include another method for performing a factory reset of the SE. Therefore, the second module may further sign resetVersion, where resetVersion indicates a version number for a factory reset of the SE, and can be used to identify different methods for a factory reset of the SE. In this application, resetVersion may be set to a fixed value, for example, "01".

After the signing, the second module returns the signed data, a public key certificate of the second module, and a device public key certificate to the third module. Optionally, the second module may return the signed data, the public key certificate of the second module, and the device public key certificate to the third module in one message, or may return the signed data, the public key certificate of the second module, and the device public key certificate to the service managing the SE in a plurality of messages. This is not limited in this application.

In some other examples of this application, when the second module is started, the public key certificate of the second module may be first checked. If there is no public key certificate of the second module, the public key certificate of the second module may be generated and the device public key certificate may be obtained by using the following method:
1. The second module creates a private-public key pair.
2. The second module produces a public key certificate of the second module by using an interface of a TA of a device certificate and saves the certificate.
3. The second module obtains a public key certificate (that is, the device public key certificate) of the TA of the device certificate through the interface of the TA of the device certificate.

In still some other examples of this application, the electronic device may separately send, for each SE as a unit, a corresponding command for performing a factory reset of the SE. For example, there are two SEs in the electronic device, that is, an SE1 and an SE2. After the foregoing process is performed, the electronic device sends a command 1 to request for a factory reset of the SE1, and send a command 2 to request for a factory reset of the SE2 and the like.

S308. The TSM of the SE verifies whether the command for performing a factory reset of the SE is valid. If the command is valid, step S309 is performed; otherwise, the process ends.

The TSM of the SE verifies whether data in a signature is correct and whether the signature is correct. Specifically, steps of performing verification on the signature are as follows:
1. The TSM of the SE uses a public key of an authorization center to decompress a device public key certificate to obtain a device public key.
2. The TSM of the SE uses the device public key to decompress a public key certificate of the second module to obtain a public key of the second module.
3. The TSM of the SE uses the public key of the second module to verify whether signature data in a command for performing a factory reset of the SE is correct. If the signature data is correct, it indicates that access to the current electronic device is valid, data in the signature is not tampered with, and the command for performing a factory reset of the SE may be executed. Otherwise, the access is invalid, and the command for performing a factory reset of the SE cannot be executed.

S309. The TSM of the SE deletes the SSD from the SE according to a locally stored service SSD configuration list.

The service SSD configuration list is determined by a manufacturer or a management party of the SE after negotiating with a service provider. The list includes a list of SSDs of some security services of the service provider that the manufacturer or the management party of the SE can delete by itself during a factory reset of the electronic device.

In step S306, the TSM of the SE has obtained the SSD installed in the electronic device and the applet installed in each SSD. In this step, the electronic device may determine, according to the service SSD configuration list, an SSD that can be deleted in the SSDs installed in the electronic device during the factory reset of the electronic device, that is, determine a target SSD.

Then, the TSM of the SE may send an application protocol data unit (application protocol data unit, APDU) command (a processing command of the SE) to the SE by using the third module and an OMA API, and delete an applet in the target SSD and the target SSD in each SE one by one, to perform a factory reset of the SE. The following describes a process of performing a factory reset of an SE module by using an example in which a factory reset of an SE is performed.
1. A TSM of the SE establishes a secure channel with an ISD of the SE.
2. The TSM of the SE delivers, through the secure channel, commands for deleting target SSDs one by one, where an applet in each target SSD is deleted first and then the target SSD is deleted.

When the TSM of the SE deletes the target SSDs one by one, if deletion of a specific target SSD fails, deletion of the remaining target SSDs is continued. After the TSM of the SE performs a deletion operation on all the target SSDs, if there is a target SSD that fails to be deleted, the TSM of the SE returns an error code to the third module of the electronic device. After receiving the error code, the third module initiates an operation of performing a factory reset of the SE again, that is, performs steps S307 to S309. It should be noted that, to prevent the TSM of the SE from entering an infinite loop of performing a factory reset of the SE because one or more target SSDs continuously fail to be deleted, a quantity of times that the third module re-initiates the operation of performing a factory reset of the SE may be set. In other words, after the quantity of times that the third module re-initiates the operation of performing a factory reset of the SE reaches a preset quantity, step S310 is directly performed.

In some examples, the TSM of the SE may re-initiate deletion of all target SSDs, or re-initiate deletion of a target SSD that fails to be deleted. This is not limited in this application.

In some other examples of this application, the third module may further perform other special processing on the security service before step S310. For example, for a bus card, the third module may interact with a TSM of a bus card service, and report a balance of the bus card to the TSM of the bus card service, to migrate the balance to another bus card.

S310. The electronic device wipes the to-be-deleted identifier.

For example, in some examples, the to-be-deleted identifier is stored in the second module, and the third module may indicate, through the first module, the second module to wipe the to-be-deleted identifier. In some other examples, the to-be-deleted identifier is stored in the SE in the electronic device, and the third module may indicate, through the first module and the second module, the SE to wipe the to-be-deleted identifier.

In some other examples of this application, the second module sets, in the recovery mode, an identifier for prohibiting the TEE from accessing the SE, or the second module notifies a TA managing the SE that an identifier for prohibiting the TEE from accessing the SE is set. After step S310, the second module may wipe the identifier for prohibiting the TEE from accessing the SE, or notify the TA managing the SE to wipe the identifier for prohibiting the TEE from accessing the SE, so that the TA in the TEE can access the SE.

Some electronic devices have a mechanism for managing an SE, including a service managing an SE at a framework layer, a CA managing an SE in an REE, and a TA managing an SE in a TEE. In this case, an existing mechanism managing an SE may be used to cooperate with the first module added to the REE, the second module added to the TEE, and the third module added to the framework layer in this application, to jointly complete an operation of deleting an SSD from the SE. The following illustrates a specific implementation in the scenario.

For example, after the third module detects that the electronic device is powered on or is networked, the third module may read the to-be-deleted identifier from the second module in the TEE by using the first module in the REE. If the to-be-deleted identifier is set, the third module notifies a service managing the SE, and triggers a factory reset of the SE, that is, wipes the SSD in the SE. The specific implementation is as follows.

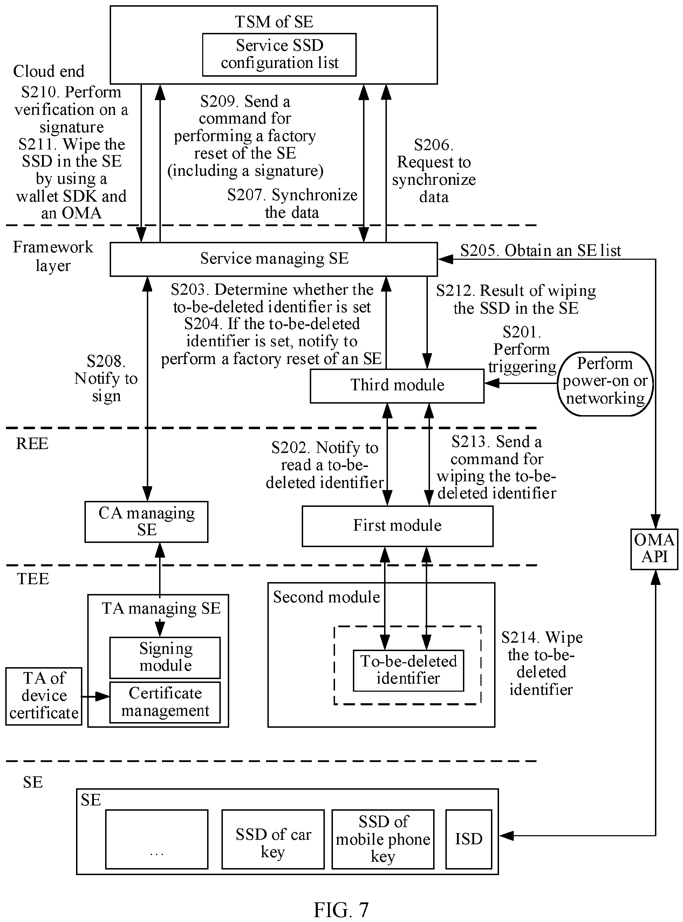

FIG. 7 is a schematic flowchart of deleting a security service according to an embodiment of this application. The method specifically includes the following steps.

S201. The third module detects that the electronic device is powered on or is networked.

S202. The third module reads and caches the to-be-deleted identifier.

In steps S201 and S202, when detecting that the electronic device is powered on or receiving a broadcast message sent when the electronic device is networked, the third module at the framework layer reads the to-be-deleted identifier.

In some examples, the to-be-deleted identifier is stored in the second module, and the third module may read the to-be-deleted identifier from the second module by using the first module, and cache the to-be-deleted identifier. In some other examples, the to-be-deleted identifier is stored in the TA managing the SE, and the third module may read the to-be-deleted identifier from the TA managing the SE by using the first module and the second module, and cache the to-be-deleted identifier. In still some other examples, the to-be-deleted identifier is stored in an SE module, and the third module may read the to-be-deleted identifier from the SE by using the first module and the second module, and cache the to-be-deleted identifier. This is not limited in this embodiment of this application.

In some other examples, in the method provided in this application, an applet and an SSD in the SE can be deleted only after the electronic device needs to be connected to a cloud server, that is, a TSM of an SE issuer (hereinafter referred to as the TSM of the SE for short). Therefore, whether the electronic device can be connected to the TSM of the SE may alternatively be determined first. Only after it is determined that the electronic device can be connected to the TSM of the SE, the third module is triggered to read the to-be-deleted identifier and perform a subsequent operation. This is not limited in this embodiment of this application.

S203. The third module determines whether the to-be-deleted identifier is set. If the to-be-deleted identifier is set, step S204 is performed; otherwise, the process ends.

S204. The third module notifies a service managing the SE that a factory reset of the SE needs to be performed.

For example, after determining that the to-be-deleted identifier is set, the third module notifies a service managing the SE that the electronic device needs to perform a factory reset of the SE, that is, delete an SSD in the SE.

In some examples, to prevent confusion from being caused by that the electronic device needs to create a new SSD according to a command from the TSM of the SE while deleting an SSD from the SE, creation of a new SSD in the SE may be prohibited when the to-be-deleted identifier is set. That is, when the service managing the SE receives a command for the TSM of the SE to establish a new security domain, the to-be-deleted identifier may be first read from the third module. If the to-be-deleted identifier is set, the service managing the SE does not create a new SSD.

S205. The service managing the SE obtains an SE list.

In some examples, the service managing the SE may obtain the SE list from the SE by using a related technology specified in an open mobile alliance (open mobile alliance, OMA) protocol, and determine, according to the obtained SE list, whether the electronic device includes an SE and a quantity of SEs. In this application, if there are a plurality of SEs, an SSD on each SE needs to be wiped for each SE, that is, each SE needs to perform a factory reset.

In some other examples, when the electronic device can be connected to the TSM of the SE, the service managing the SE may further request the TSM of the SE to generate an operand (operand) (or a random number), so that during subsequent data communication between the electronic device and the TSM of the SE, the operand may be used to prevent a playback attack, thereby ensuring data security. If the SE cannot be connected to the TSM, the process ends.

S206. If the electronic device can be connected to a TSM of an SE issuer, the service managing the SE sends a request to the TSM of the SE based on the SE list, to request the TSM of the SE to synchronize data with each SE. If the electronic device cannot be connected to the TSM of the SE, this process ends.

S207. The TSM of the SE synchronizes the data with the SE, to obtain an SSD installed in each SE and applet information of each SSD.

A TSM of the SE is responsible for creating an SSD for a security service in the SE, and a TSM of a service specifically installs an applet of the security service in the SSD. Therefore, the TSM of the SE is not aware of installation of the applet in the S SD. It can be learned from a basic international standard (Global Platform, GP) of the SE that when deleting the SSD of the security service, the TSM of the SE needs to delete the applet from the SSD first. Therefore, the TSM of the SE needs to synchronize data with the SE to obtain information about the applet installed in each SSD in the SE, so that the applet and the SSD can be deleted.

Specifically, the TSM of the SE may communicate with the SE through the service managing the SE and an OMA API, to obtain information about the applet installed in each SSD in the SE.

S208: The service managing the SE instructs, by using the CA managing the SE, the TA managing the SE to sign.

In this application, this is equivalent to that the electronic device initiates a request to the TSM of the SE for requesting a factory reset of the SE. To ensure security, the TSM of the SE requires the electronic device to sign an initiated request, and determines an identity of the electronic device according to signature data.

In some examples, the TA managing the SE signs to-be-signed data by using a private key. The TA managing the SE may sign the operand to prevent a playback attack, thereby ensuring data security. The TA managing the SE may also sign cplcData. When the electronic device includes two or more SEs, the TA managing the SE may separately sign for each SE, that is, a chip identifier of each SE corresponds to a signature. In some other examples, this application may further include another method for performing a factory reset of the SE, the TA managing the SE may further sign resetVersion, where resetVersion indicates a version number for a factory reset of the SE, and can be used to identify different methods for a factory reset of the SE. In this application, resetVersion may be set to a fixed value, for example, "01".

After the TA managing the SE signs, the signed data, a public key certificate of the TA managing the SE, and a device public key certificate are returned together to the service managing the SE. Optionally, the TA managing the SE may return the signature, the public key certificate of the TA managing the SE, and the device public key certificate to the service managing the SE in one message, or may return the signature, the public key certificate of the TA managing the SE, and the device public key certificate to the service managing the SE in a plurality of messages. This is not limited in this application.

In some other examples, when the TA managing the SE is started, the public key certificate of the TA managing the SE may be checked. If there is no public key certificate of the TA managing the SE, the public key certificate of the TA managing the SE may be generated, and the device public key certificate may be obtained. For a specific implementation, refer to related descriptions in step S307 in the foregoing text. Details are not described again.

S209. The TA managing the SE sends a command for performing a factory reset of the SE to the TSM of the SE, where the command for performing a factory reset of the SE includes the signature data.

For example, the service managing the SE may separately send a corresponding command for performing a factory reset of the SE for each SE. For example, a service managing the SE manages two SEs in the electronic device, that is, an SE1 and an SE2 respectively. After the foregoing process is performed, the service managing the SE sends a command 1 to request to perform a factory reset of the SE1, and send a command 2 to request to perform a factory reset of the SE2.

S210. The TSM of the SE verifies whether the command for performing a factory reset of the SE is valid. If the command is valid, step S211 is performed; otherwise, the process ends.

The TSM of the SE verifies whether data in a signature is correct and whether the signature is correct. For a specific method for preforming verification on the signature, refer to related content in step 308 in the foregoing text. Details are not described again.

S211. The TSM of the SE deletes the SSD from the SE according to a locally stored service SSD configuration list.

For example, the TSM of the SE determines, based on the locally stored service SSD configuration list and the information about the SSD and the applet installed on the electronic device that is obtained in step S207, an SSD that can be deleted SSDs installed in the electronic device during a factory reset, that is, determines a target SSD.

Then, the TSM of the SE may send an application protocol data unit (application protocol data unit, APDU) command (a processing command of the SE) to the SE by using the service managing the SE and an OMA API, and delete a target applet and a target SSD in each SE one by one, to perform a factory reset of the SE.

In some other examples of this application, the service managing the SE may further perform other special processing on the security service before step S212. For example, for a bus card, the service managing the SE may interact with a TSM of a bus card service, and report a balance of the bus card to the TSM of the bus card service, to migrate the balance to another bus card.

For other content of this step, refer to related descriptions in step S309 in the foregoing text. Details are not described herein again.

S212. The service managing the SE returns a result of performing a factory reset of the SE to the third module.

S213. The third module sends, through the first module, a command for wiping the to-be-deleted identifier to the second module.

S214. The second module wipes the to-be-deleted identifier.

In some examples, if the to-be-deleted identifier is stored in the second module, the second module wipes the to-be-deleted identifier. In some other examples, if the to-be-deleted identifier is stored in the TA managing the SE, the second module may indicate the TA managing the SE to wipe the to-be-deleted identifier. In still some other examples, if the to-be-deleted identifier is stored in the SE module, the second module may indicate the SE to wipe the to-be-deleted identifier. This is not limited in this embodiment of this application.

In some examples of this application, the TA managing the SE sets, in the recovery mode, an identifier for prohibiting the TEE from accessing the SE. After step S213, the second module may notify the TA managing the SE to wipe the identifier for prohibiting the TEE from accessing the SE, so that the TA in the TEE can access the SE.

It may be understood that, to implement the foregoing functions, the foregoing terminal includes a corresponding hardware structure and/or software modules for performing the functions. A person of ordinary skill in the art should easily be aware that, in combination with the examples described in the embodiments disclosed in this specification, units, algorithms, and steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the embodiments of the present invention.

In this embodiment, functional modules of the electronic device may be obtained through division according to the foregoing method examples. For example, the functional modules may be obtained through division corresponding to various functions, or two or more functions may be integrated into one processing module. The integrated module may be implemented in a form of hardware, or may be implemented in a form of a software functional module. It should be noted that, in this embodiment of the present invention, module division is exemplary, and is merely a logical function division. In actual implementation, another division manner may be used.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

Functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the embodiments of this application essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A method for deleting a security service, applicable to an electronic device (100), wherein the electronic device (100) comprises a secure element SE, and the method for deleting a security service comprises:
receiving (S101), by the electronic device (100), an instruction for wiping data or performing a factory reset, and setting (S103) a first identifier according to the instruction;
shutting down or restarting the electronic device (100);
reading, by the electronic device (100), the first identifier if it is detected that the electronic device (100) is powered on or is networked;
sending, by the electronic device (100), a first request to a server if the first identifier is set, wherein the first request is used to request the server to delete a security service from the SE;
receiving, by the electronic device (100), a first command sent by the server, wherein the first command is a command sent by the server according to the first request to instruct the electronic device (100) to delete a target security service in the SE, and the target security service is determined by the server based on a security service installed in the SE and a list of deletable security services stored in the server; and
deleting, by the electronic device (100), a secure element applet corresponding to the target security service from the SE according to the first command;
and **characterized by**
deleting, by the electronic device (100), a supplementary security domain SSD corresponding to the target security service from the SE according to the first command.

2. The method for deleting a security service according to claim 1, wherein the first identifier is stored in a trusted execution environment TEE of the electronic device (100) or is stored in the SE.

3. The method for deleting a security service according to claim 2, wherein the first identifier is stored in a first area in the TEE of the electronic device (100), and the first area is an area that is not to be deleted after the electronic device (100) wipes data or performs a factory reset.

4. The method for deleting a security service according to any one of claims 1 to 3, further comprising:
disabling (S104), by the electronic device (100), a near field communication NFC function of the secure element applet in the electronic device (100) if the electronic device (100) receives the instruction for wiping data or performing a factory reset.

5. The method for deleting a security service according to any one of claims 1 to 4, further comprising:
reporting, by the electronic device (100), the SSD corresponding to the security service installed in the SE and the secure element applet installed in the SSD corresponding to the installed security service to the server.

6. The method for deleting a security service according to any one of claims 1 to 5, wherein after the electronic device (100) deletes the secure element applet and the SSD corresponding to the target security service according to the first command, the method for deleting a security service further comprises:
wiping, by the electronic device (100), the first identifier.

7. An electronic device (100), comprising: a processor (110), a memory (121), and a touchscreen (194), wherein the memory (121) and the touchscreen (194) are coupled to the processor (110), the memory (121) is configured to store computer program code, the computer program code comprises computer instructions, and the processor (110), when reading the computer instructions from the memory (121), causes the electronic device (100) to perform the following operations:
receiving an instruction for wiping data or performing a factory reset, and setting a first identifier according to the instruction;
shutting down or restarting;
reading the first identifier if it is detected that the electronic device (100) is powered on or is networked;
sending a first request to a server if the first identifier is set, wherein the first request is used to request the server to delete a security service from an SE;
receiving a first command sent by the server, wherein the first command is a command sent by the server according to the first request to instruct the electronic device (100) to delete a target security service in the SE, and the target security service is determined by the server based on a security service installed in the SE and a list of deletable security services stored in the server; and
deleting a secure element applet corresponding to the target security service from the SE according to the first command;
and **characterized in that**
the processor (110), when reading the computer instructions from the memory (121), causes the electronic device (100) to perform electronic device (100) deleting a supplementary security domain SSD corresponding to the target security service from the SE according to the first command.

8. The electronic device (100) according to claim 7, wherein the first identifier is stored in a trusted execution environment TEE of the electronic device (100) or is stored in the SE.

9. The electronic device (100) according to claim 8, wherein the first identifier is stored in a first area in the TEE of the electronic device (100), and the first area is an area that is not to be deleted after the electronic device (100) wipes data or performs a factory reset.

10. The electronic device (100) according to any one of claims 7 to 9, further comprising:
disabling a near field communication NFC function of the secure element applet in the electronic device (100) if the electronic device (100) receives the instruction for wiping data or performing a factory reset.

11. The electronic device (100) according to any one of claims 7 to 10, further comprising:
setting a second identifier if the electronic device (100) receives the instruction for wiping data or performing a factory reset, and denying, by a trusted application TA that is in the TEE of the electronic device (100) and that manages the SE, access of a service TA to the SE if the second identifier is set.

12. The electronic device (100) according to claim 11, wherein the second identifier is stored in a second area in the TEE of the electronic device (100), and the second area is an area that is not to be deleted after the electronic device (100) wipes data or performs a factory reset.

13. The electronic device (100) according to any one of claims 7 to 12, wherein
after deleting the secure element applet and the SSD corresponding to the target security service according to the first command, the electronic device (100) wipes the first identifier.

## Patentansprüche

1. Verfahren zum Löschen eines Sicherheitsdienstes, das auf eine elektronische Vorrichtung (100) anwendbar ist, wobei die elektronische Vorrichtung (100) ein sicheres Element SE umfasst und das Verfahren zum Löschen eines Sicherheitsdienstes Folgendes umfasst:
Empfangen (S101) durch die elektronische Vorrichtung (100) einer Anweisung zum Löschen von Daten oder zum Ausführen eines Rücksetzens auf Werkseinstellungen und Setzen (S103) einer ersten Kennung gemäß der Anweisung;
Herunterfahren oder Neustarten der elektronischen Vorrichtung (100),
Lesen durch die elektronische Vorrichtung (100) der ersten Kennung, falls detektiert wird, dass die elektronische Vorrichtung (100) eingeschaltet ist oder vernetzt ist,
Senden durch die elektronische Vorrichtung (100) einer ersten Anforderung an einen Server, falls die erste Kennung gesetzt ist, wobei die erste Anforderung verwendet wird, um den Server aufzufordern, einen Sicherheitsdienst aus dem SE zu löschen,
Empfangen durch die elektronische Vorrichtung (100) eines durch den Server gesendeten ersten Befehls, wobei der erste Befehl ein Befehl ist, der durch den Server gemäß der ersten Anforderung gesendet wird, um die elektronische Vorrichtung (100) anzuweisen, einen Ziel-Sicherheitsdienst in dem SE zu löschen, wobei der Ziel-Sicherheitsdienst durch den Server basierend auf einem Sicherheitsdienst, der in dem SE installiert ist, und einer Liste der löschbaren Sicherheitsdienste, die in dem Server gespeichert ist, bestimmt wird, und
Löschen durch die elektronische Vorrichtung (100) eines Applets des sicheren Elements, das dem Ziel-Sicherheitsdienst entspricht, aus dem SE gemäß dem ersten Befehl;
und **gekennzeichnet durch**
Löschen durch die elektronische Vorrichtung (100) einer ergänzenden Sicherheits-Domain, SSD, die dem Ziel-Sicherheitsdienst entspricht, aus dem SE gemäß dem ersten Befehl.

2. Verfahren zum Löschen eines Sicherheitsdienstes nach Anspruch 1, wobei die erste Kennung in einer vertrauenswürdigen Ausführungsumgebung, TEE, der elektronischen Vorrichtung (100) gespeichert ist oder in dem SE gespeichert ist.

3. Verfahren zum Löschen eines Sicherheitsdienstes nach Anspruch 2, wobei die erste Kennung in einem ersten Bereich in der TEE der elektronischen Vorrichtung (100) gespeichert ist, wobei der erste Bereich ein Bereich ist, der nicht gelöscht werden soll, nachdem die elektronische Vorrichtung (100) die Daten gelöscht hat oder ein Rücksetzen auf Werkseinstellungen ausgeführt hat.

4. Verfahren zum Löschen eines Sicherheitsdienstes nach einem der Ansprüche 1 bis 3, das ferner Folgendes umfasst:
Deaktivieren (S104) durch die elektronische Vorrichtung (100) einer Nahfeldkommunikationsfunktion, NFC-Funktion, des Applets des sicheren Elements in der elektronischen Vorrichtung (100), falls die elektronische Vorrichtung (100) die Anweisung zum Löschen der Daten oder zum Ausführen eines Rücksetzens auf Werkseinstellungen empfängt.

5. Verfahren zum Löschen eines Sicherheitsdienstes nach einem der Ansprüche 1 bis 4, das ferner Folgendes umfasst:
Melden durch die elektronische Vorrichtung (100) der SSD, die dem Sicherheitsdienst entspricht, der in dem SE installiert ist, und des Applets des sicheren Elements, das in der SSD installiert ist, die dem installierten Sicherheitsdienst entspricht, an den Server.

6. Verfahren zum Löschen eines Sicherheitsdienstes nach einem der Ansprüche 1 bis 5, wobei, nachdem die elektronische Vorrichtung (100) das Applet des sicheren Elements und die SSD, die einem Ziel-Sicherheitsdienst entspricht, gemäß dem ersten Befehl gelöscht hat, das Verfahren zum Löschen eines Sicherheitsdienstes ferner Folgendes umfasst:
Löschen durch die elektronische Vorrichtung (100) der ersten Kennung.

7. Elektronische Vorrichtung (100), die Folgendes umfasst: einen Prozessor (110), einen Speicher (121) und einen Berührungsschirm (194), wobei der Speicher (121) und der Berührungsschirm (194) an den Prozessor (110) gekoppelt sind, wobei der Speicher (121) konfiguriert ist, Computerprogrammcode zu speichern, wobei der Computerprogrammcode Computeranweisungen umfasst und der Prozessor (110), wenn er die Computeranweisungen aus dem Speicher (121) liest, die elektronische Vorrichtung (100) veranlasst, die folgenden Operationen auszuführen:
Empfangen einer Anweisung zum Löschen von Daten oder zum Ausführen eines Rücksetzens auf Werkseinstellungen und Setzen einer ersten Kennung gemäß der Anweisung;
Herunterfahren oder Neustarten;
Lesen der ersten Kennung, falls detektiert wird, dass die elektronische Vorrichtung (100) eingeschaltet ist oder vernetzt ist,
Senden einer ersten Anforderung an einen Server, falls die erste Kennung gesetzt ist, wobei die erste Anforderung verwendet wird, um den Server aufzufordern, einen Sicherheitsdienst aus einem SE zu löschen,
Empfangen eines durch den Server gesendeten ersten Befehls, wobei der erste Befehl ein Befehl ist, der durch den Server gemäß der ersten Anforderung gesendet wird, um die elektronische Vorrichtung (100) anzuweisen, einen Ziel-Sicherheitsdienst in dem SE zu löschen, wobei der Ziel-Sicherheitsdienst durch den Server basierend auf einem Sicherheitsdienst, der in dem SE installiert ist, und einer Liste der löschbaren Sicherheitsdienste, die in dem Server gespeichert ist, bestimmt wird, und
Löschen eines Applets des sicheren Elements, das dem Ziel-Sicherheitsdienst entspricht, aus dem SE gemäß dem ersten Befehl;
und **dadurch gekennzeichnet, dass**
der Prozessor (110), wenn er die Computeranweisungen aus dem Speicher (121) liest,
die elektronische Vorrichtung (100) veranlasst, Folgendes auszuführen:
Löschen durch die elektronische Vorrichtung (100) einer ergänzenden Sicherheits-Domain, SSD, die dem Ziel-Sicherheitsdienst entspricht, aus dem SE gemäß dem ersten Befehl.

8. Elektronische Vorrichtung (100) nach Anspruch 7, wobei die erste Kennung in einer vertrauenswürdigen Ausführungsumgebung, TEE, der elektronischen Vorrichtung (100) gespeichert ist oder in dem SE gespeichert ist.

9. Elektronische Vorrichtung (100) nach Anspruch 8, wobei die erste Kennung in einem ersten Bereich in der TEE der elektronischen Vorrichtung (100) gespeichert ist, wobei der erste Bereich ein Bereich ist, der nicht gelöscht werden soll, nachdem die elektronische Vorrichtung (100) die Daten gelöscht hat oder ein Rücksetzen auf Werkseinstellungen ausgeführt hat.

10. Elektronische Vorrichtung (100) nach einem der Ansprüche 7 bis 9, die ferner Folgendes umfasst:
Deaktivieren einer Nahfeldkommunikationsfunktion, NFC-Funktion, des Applets des sicheren Elements in der elektronischen Vorrichtung (100), falls die elektronische Vorrichtung (100) die Anweisung zum Löschen der Daten oder zum Ausführen eines Rücksetzens auf Werkseinstellungen empfängt.

11. Elektronische Vorrichtung (100) nach einem der Ansprüche 7 bis 10, die ferner Folgendes umfasst:
Setzen einer zweiten Kennung, falls die elektronische Vorrichtung (100) die Anweisung zum Löschen der Daten oder zum Ausführen eines Rücksetzens auf Werkseinstellungen empfängt, und Verweigern, durch eine vertrauenswürdige Anwendung, TA, die sich in der TEE der elektronischen Vorrichtung (100) befindet und die das SE managt, des Zugriffs einer Dienst-TA auf das SE, falls die zweite Kennung gesetzt ist.

12. Elektronische Vorrichtung (100) nach Anspruch 11, wobei die zweite Kennung in einem zweiten Bereich in der TEE der elektronischen Vorrichtung (100) gespeichert ist, wobei der zweite Bereich ein Bereich ist, der nicht gelöscht werden soll, nachdem die elektronische Vorrichtung (100) die Daten gelöscht hat oder ein Rücksetzen auf Werkseinstellungen ausgeführt hat.

13. Elektronische Vorrichtung (100) nach einem der Ansprüche 7 bis 12, wobei nach dem Löschen des Applets des sicheren Elements und der SSD, die dem Ziel-Sicherheitsdienst entspricht, gemäß dem ersten Befehl, die elektronische Vorrichtung (100) die erste Kennung löscht.

## Revendications

1. Procédé pour supprimer un service de sécurité, applicable à un dispositif électronique (100), le dispositif électronique (100) comprenant un élément sécurisé SE, et le procédé pour supprimer un service de sécurité comprenant :
la réception (S101), par le dispositif électronique (100), d'une instruction pour effacer des données ou réaliser une réinitialisation à la configuration initiale d'usine, et le réglage (S03) d'un premier identifiant selon l'instruction ;
l'arrêt ou le redémarrage du dispositif électronique (100) ;
la lecture, par le dispositif électronique (100), du premier identifiant s'il est détecté que le dispositif électronique (100) est allumé ou est mis en réseau ;
l'envoi, par le dispositif électronique (100), d'une première demande, à un serveur, si le premier identifiant est réglé, dans lequel la première demande est utilisée pour demander au serveur de supprimer un service de sécurité du SE ;
la réception, par le dispositif électronique (100), d'une première commande envoyée par le serveur, dans lequel la première commande est une commande envoyée par le serveur selon la première demande pour donner l'ordre au dispositif électronique (100) de supprimer un service de sécurité cible dans le SE, et le service de sécurité cible est déterminé par le serveur sur la base d'un service de sécurité installé dans le SE et d'une liste de services de sécurité supprimables stockée dans le serveur ; et
la suppression, par le dispositif électronique (100), d'une appliquette d'élément sécurisé, correspondant au service de sécurité cible, du SE, selon la première commande ;
et **caractérisé par**
la suppression, par le dispositif électronique (100), d'un domaine de sécurité supplémentaire SSD, correspondant au service de sécurité cible, du SE, selon la première commande.

2. Procédé pour supprimer un service de sécurité selon la revendication 1, dans lequel le premier identifiant est stocké dans un environnement d'exécution de confiance TEE du dispositif électronique (100) ou est stocké dans le SE.

3. Procédé pour supprimer un service de sécurité selon la revendication 2, dans lequel le premier identifiant est stocké dans une première zone dans le TEE du dispositif électronique (100), et la première zone est une zone qui ne doit pas être supprimée après que le dispositif électronique (100) efface des données ou réalise une réinitialisation à la configuration initiale d'usine.

4. Procédé pour supprimer un service de sécurité selon l'une quelconque des revendications 1 à 3, comprenant en outre :
la désactivation (S104), par le dispositif électronique (100), d'une fonction de communication en champ proche NFC de l'appliquette d'élément sécurisé dans le dispositif électronique (100) si le dispositif électronique (100) reçoit l'instruction pour effacer des données ou réaliser une réinitialisation à la configuration initiale d'usine.

5. Procédé pour supprimer un service de sécurité selon l'une quelconque des revendications 1 à 4, comprenant en outre :
l'émission du rapport, par le dispositif électronique (100), du SSD, correspondant au service de sécurité installé dans le SE, et de l'appliquette d'élément sécurisé installée dans le SSD, correspondant au service de sécurité installé, vers le serveur.

6. Procédé pour supprimer un service de sécurité selon l'une quelconque des revendications 1 à 5, après que le dispositif électronique (100) supprime l'appliquette d'élément sécurisé et le SSD, correspondant au service de sécurité cible, selon la première commande, le procédé pour supprimer un service de sécurité comprenant en outre :
l'effacement, par le dispositif électronique (100), du premier identifiant.

7. Dispositif électronique (100), comprenant : un processeur (110), une mémoire (121), et un écran tactile (194), dans lequel la mémoire (121) et l'écran tactile (194) sont couplés au processeur (110), la mémoire (121) est configurée pour stocker un code de programme d'ordinateur, le code de programme d'ordinateur comprend des instructions d'ordinateur, et le processeur (110), lors de la lecture des instructions d'ordinateur à partir de la mémoire (121), amène le dispositif électronique (100) à réaliser les opérations suivantes :
la réception d'une instruction pour effacer des données ou réaliser une réinitialisation à la configuration initiale d'usine, et le réglage d'un premier identifiant selon l'instruction ;
l'arrêt ou le redémarrage ;
la lecture du premier identifiant s'il est détecté que le dispositif électronique (100) est allumé ou est mis en réseau ;
l'envoi d'une première demande à un serveur si le premier identifiant est réglé, dans lequel la première demande est utilisée pour demander au serveur de supprimer un service de sécurité d'un SE ;
la réception d'une première commande envoyée par le serveur, dans lequel la première commande est une commande envoyée par le serveur selon la première demande pour donner l'ordre au dispositif électronique (100) de supprimer un service de sécurité cible dans le SE, et le service de sécurité cible est déterminé par le serveur sur la base d'un service de sécurité installé dans le SE et d'une liste de services de sécurité supprimables stockée dans le serveur ; et
la suppression d'une appliquette d'élément sécurisé, correspondant au service de sécurité cible, du SE, selon la première commande ;
et **caractérisé en ce que**
le processeur (110), lors de la lecture des instructions d'ordinateur à partir de la mémoire (121), amène le dispositif électronique (100) à réaliser, par le dispositif électronique (100), la suppression d'un domaine de sécurité supplémentaire SSD, correspondant au service de sécurité cible, du SE, selon la première commande.

8. Dispositif électronique (100) selon la revendication 7, dans lequel le premier identifiant est stocké dans un environnement d'exécution de confiance TEE du dispositif électronique (100) ou est stocké dans le SE.

9. Dispositif électronique (100) selon la revendication 8, dans lequel le premier identifiant est stocké dans une première zone dans le TEE du dispositif électronique (100), et la première zone est une zone qui ne doit pas être supprimée après que le dispositif électronique (100) efface des données ou réalise une réinitialisation à la configuration initiale d'usine.

10. Dispositif électronique (100) selon l'une quelconque des revendications 7 à 9, comprenant en outre :
la désactivation une fonction de communication en champ proche NFC de l'appliquette d'élément sécurisé dans le dispositif électronique (100) si le dispositif électronique (100) reçoit l'instruction pour effacer des données ou réaliser une réinitialisation à la configuration initiale d'usine.

11. Dispositif électronique (100) selon l'une quelconque des revendications 7 à 10, comprenant en outre :
le réglage d'un second identifiant si le dispositif électronique (100) reçoit l'instruction pour effacer des données ou réaliser une réinitialisation à la configuration initiale d'usine, et le refus, par une application de confiance TA qui est dans le TEE du dispositif électronique (100) et qui gère le SE, de l'accès par le SE à une TA de service si le second identifiant est réglé.

12. Dispositif électronique (100) selon la revendication 11, dans lequel le second identifiant est stocké dans une seconde zone dans le TEE du dispositif électronique (100), et la seconde zone est une zone qui ne doit pas être supprimée après que le dispositif électronique (100) efface des données ou réalise une réinitialisation à la configuration initiale d'usine.

13. Dispositif électronique (100) selon l'une quelconque des revendications 7 à 12, dans lequel
après la suppression de l'appliquette d'élément sécurisé et du SSD, correspondant au service de sécurité cible, selon la première commande, le dispositif électronique (100) efface le premier identifiant.
